# EUROPEAN PATENT APPLICATION

(11) **EP 4 009 403 A1**
(43) Date of publication of application: **08.06.2022**
(21) Application number: 21218131.7
(22) Date of filing: 14.12.2018
(51) Int. Cl.: H01M 4/62, H01M 50/46, H01M 4/13, H01M 4/139, H01M 10/0525

(54) **ELECTRODE AND FABRICATION METHOD, ELECTRODE ELEMENT AND NONAQUEOUS ELECTROLYTIC STORAGE ELEMENT**

(30) Priority: 19.12.2017 JP 2017243163; 02.10.2018 JP 2018187739
(62) Divisional of application: 18829504.2
(71) Applicant: Ricoh Company, Ltd., Tokyo 143-8555 (JP)
(72) Inventor: TAKAUJI, Keigo, Tokyo, 143-8555 (JP); YANAGITA, Hideo, Tokyo, 143-8555 (JP); MASUZAWA, Masahiro, Tokyo, 143-8555 (JP); ZAMA, Yuu, Tokyo, 143-8555 (JP); KIMURA, Okitoshi, Tokyo, 143-8555 (JP); KAWASE, Hiromitsu, Tokyo, 143-8555 (JP); OHKIMOTO, Miku, Tokyo, 143-8555 (JP)
(74) Representative: SSM Sandmair

(57) **Abstract**

A disclosed electrode includes an electrode base; an electrode mixture layer containing an active material and formed on the electrode base; and a porous insulating layer formed on the electrode mixture layer, where the porous insulating layer contains a resin as a main component, and at least a part of the porous insulating layer is present inside the electrode mixture layer.

## Description

### Technical Field

The disclosures discussed herein relate to an electrode and a production method thereof, an electrode element, and a nonaqueous electrolyte storage element.

### Background Art

There are rapidly increased demands for higher power, higher capacity, and longer life in electric storage elements such as batteries and power generation elements such as fuel cells. However, there are still various safety related problems for implementation of elements; specifically, it is an important issue to prevent the thermal runaway reaction caused by a short circuit between the electrodes.

The occurrence of a thermal runaway reaction is considered to be caused by the following factors. An abnormal large current flow due to a short circuit between electrodes generates heat within an element, which causes a decomposition reaction of the electrolyte and the like. The decomposition reaction of the electrolyte or the like further raises a temperature to generate a flammable gas within the element.

From this, in order to prevent the thermal runaway reaction, it is only necessary to prevent a short circuit between the electrodes. For example, Patent Document 1 discloses a technique for improving safety by providing an ion-permeable porous layer formed of an imide-based polymer on an outer surface of an electrode mixture layer.

However, a short circuit between the electrodes occurs not only in the electrochemical abnormal reaction occurring in the element such as the deposition of a metal body on the electrode, but also occurs in the deformation of the element due to external impact. Hence, it is extremely difficult to completely prevent the short circuit itself by simply providing a separator or porous layer physically separating the electrodes.

Hence, various methods for preventing thermal runaway reaction have been examined; as one of these, a separator having a shutdown function which clogs opening portions by melting at the time of heating of the element may be given so as to prevent thermal runaway reaction.

According to this method, when the temperature exceeds a certain temperature, the shutdown function works such that the discharge disappears between the positive electrode and the negative electrode; hence, inhibition of thermal runaway reaction may be expected. With respect to this method, Patent Document 2, for example, proposes a separator having a multistage shutdown function. In addition, Patent Document 3, for example, proposes a separator having an enhanced shutdown function by addition of an auxiliary material.

### Citation List

### Patent Literature

[PTL 1] International Publication Pamphlet No. WO 2014/106954
[PTL 2] Japanese Unexamined Patent Publication No. 2016-181326
[PTL 3] Japanese Unexamined Patent Publication No. 2004-288614

### Summary of Invention

### Technical Problem

However, the above-described shutdown function may be insufficient for providing an inhibition effect of a thermal runaway reaction because the positive electrode and the negative electrode are in contact with the electrolyte while maintaining the high temperature, which may cause a decomposition reaction of the electrolyte and the like.

The present invention has been made in light of the above, and an object of the present invention is to provide an electrode that is excellent in inhibiting a thermal runaway reaction.

According to an aspect of the disclosure, an electrode includes an electrode base; an electrode mixture layer containing an active material and formed on the electrode base; and a porous insulating layer formed on the electrode mixture layer, where the porous insulating layer contains a resin as a main component, and at least a part of the porous insulating layer is present inside the electrode mixture layer.

### Advantageous Effects of Invention

According to the disclosed technique, it is possible to provide an electrode excellent in inhibiting thermal runaway reaction.

### Brief Description of Drawings

[Fig. 1] FIG. 1 is a cross-sectional view illustrating a negative electrode used for a nonaqueous electrolyte storage element according to a first embodiment;
[Fig. 2] FIG. 2 is a cross-sectional view illustrating a positive electrode used for a nonaqueous electrolyte storage element according to the first embodiment;
[Fig. 3] FIG. 3 is a cross-sectional view illustrating an electrode element used for a nonaqueous electrolyte storage element according to the first embodiment;
[Fig. 4] FIG. 4 is a cross-sectional view illustrating an example of a nonaqueous electrolyte storage element according to the first embodiment;
[Fig. 5A] FIG. 5A is a schematic plan view illustrating a porous insulating layer;
[Fig. 5B] FIG. 5B is a schematic cross-sectional view schematically illustrating a porous insulating layer;
[Fig. 6A] FIG. 6A is a view illustrating a first step of a production process (part 1) of a nonaqueous electrolyte storage element according to the first embodiment;
[Fig. 6B] FIG. 6B is a view illustrating a second step of the production process (part 1) of a nonaqueous electrolyte storage element according to the first embodiment;
[Fig. 6C] FIG. 6C is a view illustrating a third step of the production process (part 1) of a nonaqueous electrolyte storage element according to the first embodiment;
[Fig. 7A] FIG. 7A is a view illustrating a first step of a production process (part 2) of a nonaqueous electrolyte storage element according to the first embodiment;
[Fig. 7B] FIG. 7B is a view illustrating a second step of the production process (part 2) of a nonaqueous electrolyte storage element according to the first embodiment;
[Fig. 7C] FIG. 7C is a view illustrating a third step of the production process (part 2) of a nonaqueous electrolyte storage element according to the first embodiment;
[Fig. 8] FIG. 8 is a view illustrating a production process (part 3) of a nonaqueous electrolyte storage element according to the first embodiment; and
[Fig. 9] FIG. 9 is a cross-sectional view illustrating an electrode element used for a nonaqueous electrolyte storage element according to a modification 1 of the first embodiment.

### Description of Embodiments

In the following, an embodiment of the present disclosure will be described with reference to the accompanying drawings. In the drawings, duplicated illustration may be omitted by assigning, where appropriate, the same numerals to the same elements.

### FIRST EMBODIMENT

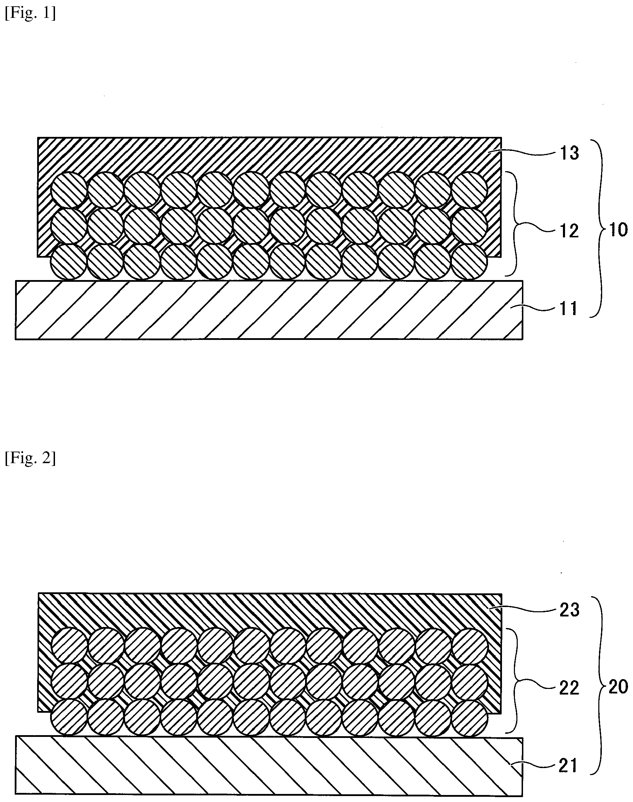

FIG. 1 is a cross-sectional view illustrating a negative electrode used for a nonaqueous electrolyte storage element according to a first embodiment. Referring to FIG. 1, a negative electrode 10 is configured to include a negative electrode base 11, a negative electrode mixture layer 12 formed on the negative electrode base 11, and a porous insulating layer 13 formed on the negative electrode mixture layer 12. The shape of the negative electrode 10 is not particularly specified and may be appropriately selected according to the purpose; the shape of the negative electrode 10 may, for example, be a flat plate shape or the like.

In the negative electrode 10, at least part of the porous insulating layer 13 is present inside the negative electrode mixture layer 12 and is integrated with a surface of the active material constituting the negative electrode mixture layer 12. Note that "to be integrated with a surface" in this case is not a film shaped member or the like being merely stacked on a lower layer as an upper layer, but is a film shaped member or the like having a surface of a substance constituting an upper layer being bonded to a surface of a substance constituting a lower layer, with part of the upper layer entering the lower layer without forming a clear interface between the upper and lower layers.

Note that the negative electrode mixture layer 12 is schematically illustrated to have a laminated structure of spherical particles; however, particles constituting the negative electrode mixture layer 12 may be spherical or non-spherical, and may have mixture of various shapes and sizes.

FIG. 2 is a cross-sectional view illustrating a positive electrode used for a nonaqueous electrolyte storage element according to the first embodiment. Referring to FIG. 2, the positive electrode 20 is configured to include a positive electrode base 21, a positive electrode mixture layer 22 formed on the positive electrode base 21, and a porous insulating layer 23 formed on the positive electrode mixture layer 22. The shape of the positive electrode 20 is not particularly specified and may be appropriately selected according to the purpose; the shape of the positive electrode 20 may, for example, be a flat plate shape or the like.

In the positive electrode 20, at least part of the porous insulating layer 23 is present inside the positive electrode mixture layer 22 and is integrated with a surface of an active material constituting the positive electrode mixture layer 22.

Note that the positive electrode mixture layer 22 is schematically illustrated to have a laminated structure of spherical particles; however, particles constituting the positive electrode mixture layer 22 may be spherical or non-spherical, and may have mixture of various shapes and sizes.

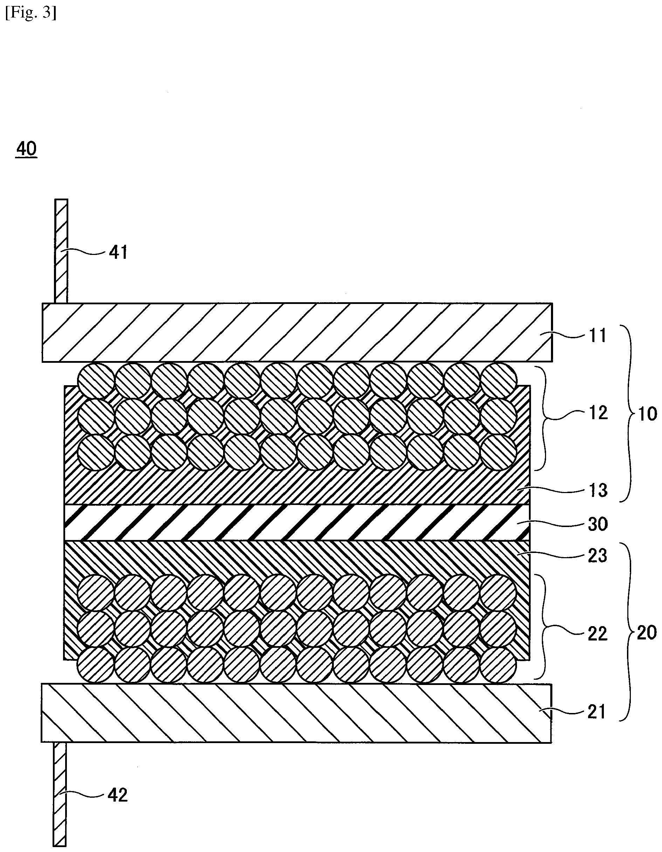

FIG. 3 is a cross-sectional view illustrating an electrode element used for a nonaqueous electrolyte storage element according to the first embodiment. Referring to FIG. 3, an electrode element 40 is configured to include the negative electrode 10 and the positive electrode 20 that are laminated via a separator 30, with the negative electrode base 11 and the positive electrode base 21 facing outward. A negative electrode lead wire 41 is connected to the negative electrode base 11. A positive electrode lead wire 42 is connected to the positive electrode base 21.

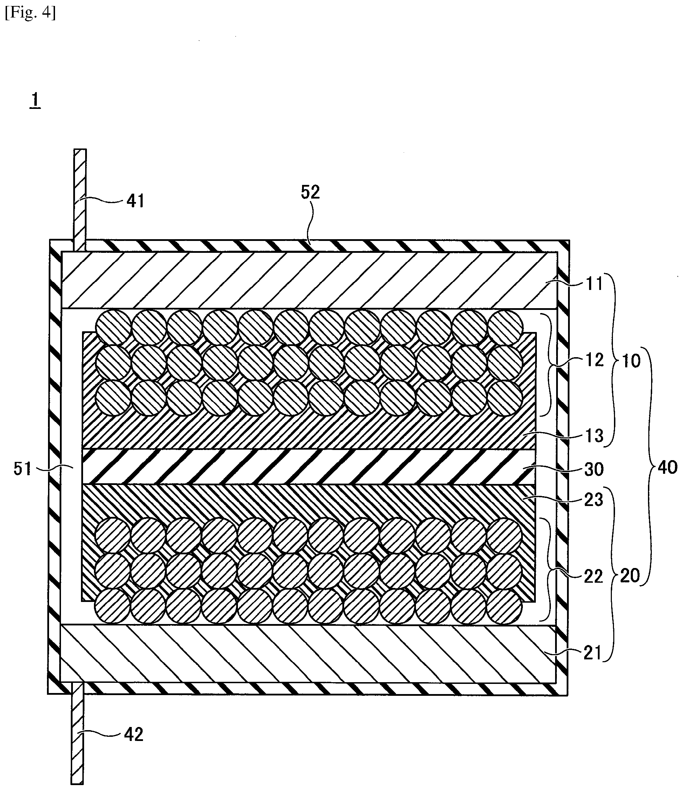

FIG. 4 is a cross-sectional view illustrating an example of a nonaqueous electrolyte storage element according to the first embodiment. Referring to FIG. 4, the nonaqueous electrolyte storage element 1 is obtained by injecting a nonaqueous electrolyte into an electrode element 40 to form an electrolyte layer 51, and sealing the obtained electrolyte layer 51 with an outer package 52. In the nonaqueous electrolyte storage element 1, the negative electrode lead wire 41 and the positive electrode lead wire 42 are drawn to the outside of the outer package 52. The nonaqueous electrolyte storage element 1 may have other members as required. The nonaqueous electrolyte storage element 1 is not particularly specified and may be appropriately selected according to the purpose. Examples of the nonaqueous electrolyte storage element 1 include a nonaqueous electrolyte secondary battery, a nonaqueous electrolyte capacitor, and the like.

The shape of the nonaqueous electrolyte storage element 1 is not particularly specified and may be appropriately selected from among various generally adopted shapes according to its intended use. Examples of the shape may include a lamination type, a cylinder type in which a sheet electrode and a separator are spirally formed, an inside-out structured cylinder type with a combination of a pellet electrode and a separator, a coin type in which a pellet electrode and a separator are laminated, and the like.

The following illustrates the nonaqueous electrolyte storage element 1 in detail. Note that in the following, the negative electrode and the positive electrode may be collectively referred to as an electrode, the negative electrode base and the positive electrode base may be collectively referred to as an electrode base, and the negative electrode mixture layer and the positive electrode mixture layer may be collectively referred to as an electrode mixture layer.

### ELECTRODE

### ELECTRODE BASE

The negative electrode base 11 and the positive electrode base 21 are not particularly specified insofar as the negative electrode base 11 and the positive electrode base 21 have planarity and conductivity; an electrode base used for a secondary battery, a capacitor, or the like that is generally used as an electricity storage element may be used. Among these, aluminum foil, copper foil, stainless steel foil, titanium foil that may be suitably used for lithium ion secondary batteries, and etched foils having micropores formed by etching these foils, and a perforated electrode base or the like used for lithium ion capacitors may be used.

Among the perforated electrode bases, a carbon paper used for a power generation element such as a fuel cell, a fibrous electrode in a nonwoven or woven planar form, or a perforated electrode base having fine pores may be used as such an electrode base. Further, as an electrode base used for a solar cell, an electrode base made of a transparent semiconductor thin film such as indium-titanium oxide or zinc oxide formed on a planar base such as glass or plastic, and a thin electrode film may be used, in addition to the above-described electrode bases.

### ELECTRODE MIXTURE LAYER

The negative electrode mixture layer 12 and the positive electrode mixture layer 22 are not particularly specified and may be appropriately selected according to the purpose. For example, the negative electrode mixture layer 12 and the positive electrode mixture layer 22 may contain at least an active material (a negative electrode active material or a positive electrode active material), and may contain a binder, a thickener, a conductive agent, and the like as required.

The negative electrode mixture layer 12 and the positive electrode mixture layer 22 are formed by dispersing a powdery active material or catalyst composition in a liquid, and coating the electrode base with the liquid, fixing the liquid on the electrode base, and drying the liquid on the electrode base. For the coating process, printing by a spray, a dispenser, a die coater, or a dip coating is normally used, and drying is carried out after the coating process.

The negative electrode active material is not particularly specified insofar as the material used is capable of reversibly absorbing and releasing alkali metal ions. Typically, a carbon material including graphite having a graphite type crystal structure may be used as a negative electrode active material. Examples of such a carbon material include natural graphite, spherical or fibrous artificial graphite, non-graphitizable carbon (hard carbon), easily graphitizable carbon (soft carbon), and the like. As a material other than the carbon material, lithium titanate may be given. Further, from the viewpoint of increasing the energy density of a lithium ion battery, high capacity materials such as silicon, tin, silicon alloy, tin alloy, silicon oxide, silicon nitride, tin oxide and the like may also be suitably used as the negative electrode active material.

As an example of the hydrogen storage alloy as the active material in a nickel metal hydride battery, an AB₂ type or A₂B type hydrogen storage alloy represented by Zr-Ti-Mn-Fe-Ag-V-Al-W, Ti₁₅Zr₂₁V₁₅Ni₂₉Cr₅Co₅Fe₁Mn₈ and the like may be given.

The positive electrode active material is not particularly specified insofar as the material is capable of reversibly absorbing and releasing alkali metal ions. Typically, an alkali metal-containing transition metal compound may be used as a positive electrode active material. For example, as the lithium-containing transition metal compound, a composite oxide containing at least one element selected from a group consisting of cobalt, manganese, nickel, chromium, iron, and vanadium, and lithium may be given.

Examples of such a composite oxide may include lithium-containing transition metal oxides such as lithium cobalt oxide, lithium nickel oxide and lithium manganate, olivine type lithium salts such as LiFePO₄, chalcogen compounds such as titanium disulfide and molybdenum disulfide, manganese dioxide, and the like.

The lithium-containing transition metal oxide is a metal oxide containing lithium and a transition metal or a metal oxide in which a part of the transition metal in the metal oxide is substituted by a hetero-element. Examples of the hetero-elements include Na, Mg, Sc, Y, Mn, Fe, Co, Ni, Cu, Zn, Al, Cr, Pb, Sb, B and the like. Among these, Mn, Al, Co, Ni and Mg may be preferable. The hetero-element may be one type or two types or more. These positive electrode active materials may be used alone or in combination of two or more. As the active material in a nickel metal hydride battery, nickel hydroxide and the like may be given.

Examples of a binder for the positive electrode or the negative electrode may include PVDF, polytetrafluoroethylene (PTFE), polyethylene, polypropylene, aramid resin, polyamide, polyimide, polyamideimide, polyacrylonitrile, polyacrylic acid, polyacrylic acid methyl ester, poly acrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinyl pyrrolidone, polyether, polyethersulfone, hexafluoropolypropylene, styrene butadiene rubber, carboxymethyl cellulose, and the like.

Further, copolymers of two or more types of materials selected from tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethylvinylether, acrylic acid, and hexadiene may also be used as a binder of the positive electrode or the negative electrode. Further, two or more types selected from the above-described materials may be mixed.

Examples of a conductive agent contained in the electrode mixture layer include graphite such as natural graphite and artificial graphite; carbon blacks such as acetylene black, ketjen black, channel black, furnace black, lamp black, thermal black and the like; conductive fibers such as carbon fiber, metal fiber and the like; metal powders such as carbon fluoride and aluminum; conductive whiskers such as zinc oxide and potassium titanate; conductive metal oxides such as titanium oxide; organic conductivity materials such as phenylene derivatives, graphene derivatives, and the like.

In an active material in a fuel cell, metallic microparticles such as platinum, ruthenium, platinum alloy, or the like supported on a catalyst carrier such as carbon may be generally used as a catalyst for a cathode electrode and an anode electrode. In order to support the catalyst particles on the surface of the catalyst carrier, for example, a catalyst carrier is suspended in water, a precursor of the catalyst particles (containing alloy components such as chloroplatinic acid, dinitrodiamino platinum, platinum chloride, platinum chloride, bisacetylacetonatoplatinum, dichlorodiammine platinum, dichlorotetramine platinum, secondary platinum ruthenate chloride ruthenic acid chloride, iridic acid chloride, chlorinated rhodium acid, chloride diiron, cobalt chloride, chromium chloride, gold chloride, silver nitrate, rhodium nitrate, palladium chloride, nickel nitrate, iron sulfate, copper chloride) is added and dissolved in a suspension, and an alkali is added to produce a metal hydroxide, which is supported on the surface of the catalyst carrier. Such a catalyst carrier is applied onto an electrode, and then is reduced in a hydrogen atmosphere or the like, thereby obtaining an electrode mixture layer having a surface with catalyst particles (the active material).

For a solar cell or the like, the active material may be an oxide semiconductor layer such as tungsten oxide powder or titanium oxide powder, SnO₂, ZnO, ZrO₂, Nb₂O₅, CeO₂, SiO₂, Al₂O₃, and the like, and the semiconductor layer carries a dye, such as a ruthenium-tris type transition metal complex, a ruthenium-bis type transition metal complex, an osmium-tris type transition metal complex, an osmium-bis type transition metal complex, ruthenium-cis-diaqua-bipyridyl complex, phthalocyanine and porphyrin, and organic-inorganic perovskite crystals.

### POROUS INSULATING LAYER

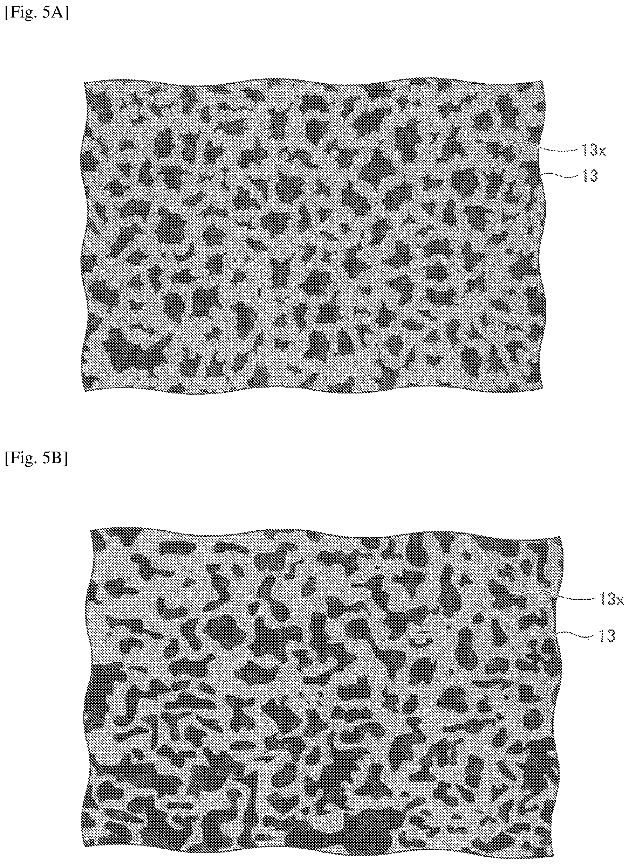

FIGS. 5A and 5B are views schematically illustrating a porous insulating layer, where FIG. 5A is a schematic plan view, and FIG. 5B is a schematic cross-sectional view. FIGS. 5A and 5B are view schematically illustrating the porous insulating layer 13; however, the same structure may apply to the porous insulating layer 23.

The porous insulating layers 13 and 23 may each have a resin as a main component and have a crosslinking structure. In this case, to have a resin as a main component indicates that a resin occupies 50% by mass or more of all the materials constituting the porous insulating layer.

The structure of the porous insulating layers 13 and 23 is not particularly specified; however, from the viewpoint of securing the permeability of the electrolyte and excellent ionic conductivity only in the secondary battery, the porous insulating layers 13 and 23 may preferably have a co-continuous structure having a three-dimensional branched network structure of the cured resin as a skeleton.

That is, the porous insulating layer 13 may preferably have a large number of pores 13x and a communicative property, where one pore 13x is connected to other pores 13x around the one pore 13x to expand three-dimensionally. Similarly, the porous insulating layer 23 may preferably have a large number of pores and a communicative property, where one pore is connected to other pores around the one pore to expand three-dimensionally. The pores communicating with one another cause sufficient permeation of the electrolyte, which will not hinder the migration of ions.

The cross-sectional shape of pores of the porous insulating layers 13 and 23 may be various shapes and various sizes, including a substantially circular shape, a substantially elliptical shape, a substantially polygonal shape, and the like. Note that the size of the pores refers to the length of the longest portion in the cross-sectional shape. The size of the pores may be obtained from a cross-sectional photograph taken by a scanning electron microscope (SEM).

The size of pores of the porous insulating layers 13 and 23 is not particularly specified; however, as far as secondary batteries are concerned, it is preferable that the size of pores be approximately 0.1 to 10 µm, from the viewpoint of electrolyte permeability.

The polymerizable compound corresponds to a precursor of a resin for forming a porous structure and may be any resin insofar as the resin may form a crosslinkable structure by irradiation with light or heat; examples of such a resin include acrylate resin, methacrylate resin, urethane acrylate resin, vinyl ester resin, unsaturated polyester, epoxy resin, oxetane resin, vinyl ether, and resin utilizing a thiol-ene reaction. Among these, from a viewpoint of productivity, an acrylate resin, a methacrylate resin, a urethane acrylate resin, and a vinyl ester resin that easily form a structure by utilizing radical polymerization are preferable due to their high reactivity.

The above-described resin may obtain a function curable with light or heat by preparing a mixture of a polymerizable monomer and a compound generating a radical or an acid by the application of light or heat. Further, in order to form the porous insulating layers 13 and 23 by polymerization induced phase separation, an ink obtained by mixing porogen with the above mixture in advance may be prepared.

The polymerizable compound has at least one radically polymerizable functional group. Examples of such a polymerizable compound include monofunctional, bifunctional, trifunctional or higher functional radical polymerizable compounds, functional monomers, radically polymerizable oligomers, and the like. Among these, a bifunctional or higher functional radical polymerizable compound may be particularly preferable.

Examples of the monofunctional radically polymerizable compound include 2-(2-ethoxyethoxy) ethyl acrylate, methoxy polyethylene glycol monoacrylate, methoxy polyethylene glycol monomethacrylate, phenoxy polyethylene glycol acrylate, 2-acryloyloxyethyl succinate, 2-ethylhexyl acrylate, 2-hydroxyethyl acrylate, 2-hydroxypropyl acrylate, tetrahydrofurfuryl acrylate, 2-ethylhexyl carbitol acrylate, 3-methoxybutyl acrylate, benzyl acrylate, cyclohexyl acrylate, isoamyl acrylate, isobutyl acrylate, methoxytriethylene glycol acrylate, phenoxytetraethylene glycol acrylate, cetyl acrylate, isostearyl acrylate, stearyl acrylate, a styrene monomer, and the like. Each of these compounds may be used alone, or two or more of these compounds may be used in combination.

Examples of the bifunctional radically polymerizable compound include 1,3-butanediol diacrylate, 1,4-butanediol diacrylate, 1,4-butanediol dimethacrylate, 1,6-hexanediol diacrylate, 1,6-hexanediol dimethacrylate, diethylene glycol diacrylate, polyethylene glycol diacrylate, neopentyl glycol diacrylate, EO-modified bisphenol A diacrylate, EO-modified bisphenol F diacrylate, neopentyl glycol diacrylate, tricyclodecanedimethanol diacrylate, and the like. Each of these compounds may be used alone, or two or more of these compounds may be used in combination.

Examples of the trifunctional or higher functional radically polymerizable compound include trimethylolpropane triacrylate (TMPTA), trimethylolpropane trimethacrylate, EO-modified trimethylolpropane triacrylate, PO-modified trimethylolpropane triacrylate, caprolactone-modified trimethylolpropane triacrylate, HPA-modified trimethylolpropane trimethacrylate, pentaerythritol triacrylate, pentaerythritol tetraacrylate (PETTA), glycerol triacrylate, ECH-modified glycerol triacrylate, EO-modified glycerol triacrylate, PO-modified glycerol triacrylate, tris(acryloyloxyethyl) isocyanurate, dipentaerythritol hexaacrylate (DPHA), caprolactone-modified dipentaerythritol hexaacrylate, dipentaerythritol hydroxypentaacrylate, alkyl-modified dipentaerythritol pentaacrylate, alkyl-modified dipentaerythritol tetraacrylate, alkyl-modified dipentaerythritol triacrylate, dimethylol propane tetraacrylate (DTMPTA), pentaerythritol ethoxytetraacrylate, EO-modified phosphoric acid triacrylate, 2,2,5,5-tetrahydroxymethylcyclopentanone tetraacrylate, and the like. Each of these compounds may be used alone, or two or more of these compounds may be used in combination.

As a photopolymerization initiator, a photo radical generator may be used. Examples of such a photo radical generator may include photo radical polymerization initiators such as Michler's ketone and benzophenone, which are known under the trade names Irgacure and Darocure. Preferable examples of more specific compounds include benzophenone, acetophenone derivatives, benzoin alkyl ether and ester such as α-hydroxy- or α-aminocetophenone, 4-aroyl-1,3-dioxolane, benzil ketal, 2,2-diethoxyacetophenone, p-dimethylaminoacetophene, p-dimethylaminopropiophenone, benzophenone, 2-chlorobenzophenone, pp'-dichlorobenzophene, pp'-bisdiethylaminobenzophenone, Michler's ketone, benzyl, benzoin, benzyl dimethyl ketal, tetramethyl thiuram monosulfide, thioxanthone, 2-chlorothioxanthone, 2-methylthioxanthone, azobisisobutyronitrile, benzoin peroxide, di-tert-butyl peroxide, 1-hydroxycyclohexyl phenyl ketone, 2-hydroxy-2-methyl-1-phenyl-1-one, 1-(4-isopropylphenyl)-2-hydroxy-one, methyl benzoyl formate, benzoin isopropyl ether, benzoin methyl ether, benzoin ethyl ether, benzoin ether, benzoin isobutyl ether, benzoin n-butyl ether, benzoin n-propyl and the like; 1-hydroxy-cyclohexyl-phenyl-ketone, 2-benzyl-2-dimethylamino-1-(4-morpholinophenyl)-butanone-1, 1-hydroxy-cyclohexyl-phenyl-ketone, 2,2-dimethoxy-1,2-diphenylethan-1-one, bis(η5-2,4-cyclopentadien-1-yl)-bis(2,6-difluoro-3-(1H-pyrrol-1-yl)-phenyl) titanium, bis(2,4,6-trimethylbenzoyl)-phenylphosphine oxide, 2-methyl-1-[4-(methylthio)phenyl]-2-morpholinopropan-1-one, 2-hydroxy-2-methyl-1-phenyl-propan-1-one (Darocure 1173), bis(2,6-dimethoxybenzoyl)-2,4,4-trimethyl-pentylphosphine oxide, 1-[4-(2-hydroxyethoxy)-phenyl]-2-hydroxy-2-methyl-1-propan-1-one monoacylphosphine oxide, bisacylphosphine oxide, titanocene, fluorecene, anthraquinone, thioxanthone, xanthone, lofine dimer, trihalomethyl compounds, dihalomethyl compounds, active ester compounds, organic boron compounds, and the like.

Furthermore, a photocrosslinking radical generator such as a bisazide compound may be contained simultaneously. Further, when polymerization is carried out only with heat, a typical thermal polymerization initiator such as azobisisobutylnitrile (AIBN), which is a typical photoradical generator, may be used.

A similar function may be achieved by preparing a mixture of a photoacid generator that generates an acid upon irradiation with light and at least one monomer that is polymerized in the presence of an acid. When such a liquid ink is irradiated with light, the photoacid generator generates acid; this acid functions as a catalyst for crosslinking reaction of the polymerizable compound.

The generated acid diffuses in the ink layer. Diffusion of acid and the crosslinking reaction using acid as a catalyst may be accelerated by heating. Unlike radical polymerization, this crosslinking reaction is not inhibited by the presence of oxygen. The obtained resin layer exhibits excellent adhesiveness as compared with that obtained by radical polymerization.

Polymerizable compounds that crosslink in the presence of an acid may be cationically polymerizable vinyl bond-containing monomers such as a compound having a cyclic ether group such as an epoxy group, an oxetane group, an oxolane group and the like, an acrylic or vinyl compound having the above-mentioned substituent on the side chain, a carbonate compound, a low molecular weight melamine compound, vinyl ethers, vinylcarbazoles, styrene derivatives, α-methylstyrene derivatives, vinyl alcohol and acrylic, and vinyl alcohol esters including ester compounds such as methacrylate.

Examples of the photoacid generator capable of generating an acid upon irradiation of light may include an onium salt, a diazonium salt, a quinone diazide compound, an organic halide, an aromatic sulfonate compound, a bisulfone compound, a sulfonyl compound, a sulfonate compound, a sulfonium compound, a sulfamide compound, an iodonium compound, a sulfonyldiazomethane compound, and mixtures of these compounds, and the like.

Among these, an onium salt is preferably used as the photoacid generator. Examples of the onium salt to be used include a diazonium salt, a phosphonium salt and a sulfonium salt of which the counter ion may be a fluoroborate anion, a hexafluoroantimonate anion, a hexafluoroarsenate anion, a trifluoromethanesulfonate anion, a paratoluenesulfonate anion, and a paranitrotoluenesulfonate anion. For the photoacid generator, a halogenated triazine compound may also be used.

The photoacid generator may further contain a sensitizing dye. Examples of the sensitizing dye may include an acridine compound, benzoflavins, perylene, anthracene, laser dyes, and the like.

The porogen is mixed to form pores in the cured porous insulating layer. The porogen may be any liquid substance capable of dissolving a polymerizable monomer and a compound generating a radical or an acid by application of light or heat, and also capable of causing phase separation in the course of polymerization of a polymerizable monomer and a compound generating a radical or an acid by light or heat.

Examples of such porogens include ethylene glycol such as diethylene glycol monomethyl ether, ethylene glycol monobutyl ether and dipropylene glycol monomethyl ether, γ-butyrolactone, esters such as propylene carbonate, amides such as NN dimethylacetamide, and the like.

Further, liquid substances having a relatively large molecular weight, such as methyl tetradecanoate, methyl decanoate, methyl myristate, tetradecane, and the like also tend to function as porogens. Among these, a large number of ethylene glycols have a high boiling point. In the phase separation mechanism, a structure to be formed largely depends on the concentration of porogen. Hence, use of the above liquid substances enables forming of a stable porous insulating layer. Porogens may be used alone or in combination of two or more types.

The ink viscosity is preferably from 1 to 150 mPa·s at 25°C, and more preferably from 5 to 20 mPa·s at 25°C. The solid content concentration of the polymerizable monomer in the ink solution is preferably 5 to 70% by mass, and is more preferably 10 to 50% by mass. Within the above viscosity range, ink permeation occurs in gaps of the active material after coating; hence, it is possible to form the porous insulating layer 13 inside the negative electrode mixture layer 12 and form the porous insulating layer 23 inside the positive electrode mixture layer 22.

Further, in a case of the concentration of the polymerizable monomer being higher than the above range, the ink viscosity increases, which makes it difficult to form a porous insulating layer inside the active material. In addition, the size of pores may be as small as several tens of nm or less, which may make it difficult to penetrate the electrolyte through the pores. Further, when the concentration of the polymerizable monomer is lower than the above range, a three-dimensional network structure of a resin will not be sufficiently formed, which may tend to remarkably lower the strength of the obtained porous insulating layer.

The porous insulating layers 13 and 23 are not necessarily distributed in the deepest portions inside the negative electrode mixture layer 12 and the positive electrode mixture layer 22, respectively; the porous insulating layers 13 and 23 may penetrate into the negative electrode mixture layer 12 and the positive electrode mixture layer 22, respectively, to the extent of improving an adhesion of the porous insulating layers 13 and 23. There are cases where the anchor effect may be obtained in a state where the porous insulating layers 13 and 23 sufficiently follow the surface irregularities of the active material and slightly penetrate into the gaps between the active materials. Therefore, the optimum permeation amounts of the porous insulating layers 13 and 23 largely depend on a material and shape of the active material. The porous insulating layers 13 and 23 may preferably be present within 0.5% or more, or may more preferably be present within 1.0% or more, in the depth directions from the respective surfaces of the negative electrode mixture layer 12 and the positive electrode mixture layer 22. The distribution of the porous insulating layers 13 and 23 present inside the negative electrode mixture layer 12 and the positive electrode mixture layer 22, respectively, may be appropriately adjusted according to the specification target of the secondary battery element.

Further, a method for forming the porous insulating layers 13 and 23 is not particularly specified insofar as ink is applied and formed. Examples of such a method include a spin coating method, a casting method, a micro gravure coating method, a gravure coating method, a bar coating method, a roll coating method, a wire bar coating method, a dip coating method, a slit coating method, a capillary coating method, a spray coating method, a nozzle coating method, and various printing methods such as a printing method, a screen printing method, a flexographic printing method, an offset printing method, a reverse printing method, and an ink jet printing method.

### SEPARATOR

The separator 30 is provided between the negative electrode 10 and the positive electrode 20 in order to prevent a short circuit between the negative electrode 10 and the positive electrode 20. The separator 30 is an insulating layer having ion permeability and having no electron conductivity. The material, shape, size, and structure of the separator 30 are not particularly specified, and may be appropriately selected according to the purpose.

Examples of materials for the separator 30 may include paper such as kraft paper, vinylon mixed paper, synthetic pulp mixed paper, polyolefin nonwoven fabric such as cellophane, polyethylene graft film, polypropylene melt flow nonwoven fabric, polyamide nonwoven fabric, glass fiber nonwoven fabric, polyethylene microporous film, polypropylene microporous film, and the like.

Among these, from the viewpoint of holding the electrolyte, those having a porosity of 50% or more are preferable. As the separator 30, for example, a material obtained by mixing ceramic microparticles such as alumina or zirconia with a binder or a solvent may be used. In this case, it is preferable that the mean particle size of the ceramic microparticles be, for example, approximately 0.2 to 3.0 µm. The separator 30 having the ceramic microparticles of the above mean particle size range may be provided with lithium ion permeability. The mean thickness of the separator 30 is not particularly specified and may be appropriately selected according to the purpose; the mean thickness of the separator 30 may preferably be 3 µm or more and 50 µm or less, and may more preferably be 5 µm or more and 30 µm or less. The structure of the separator 30 may be a single layer structure or a laminate structure.

### ELECTROLYTE LAYER

As an electrolyte component contained in the electrolyte layer 51, a solution obtained by dissolving a solid electrolyte in a solvent, or a liquid electrolyte such as an ionic liquid may be used. As a material for the electrolyte, inorganic ion salts such as alkali metal salts and alkaline earth metal salts, quaternary ammonium salts or acids, and supporting salts of alkalis may be used. Specific examples include LiClO₄, LiBF₄, LiAsF₆, LiPF₆, LiCF₃SO₃, LiCF₃COO, KCl, NaClO₃, NaCl, NaBF₄, NaSCN, KBF₄, Mg(ClO₄)₂, Mg(BF₄)₂ and the like.

Examples of the solvent for dissolving solid electrolyte include propylene carbonate, acetonitrile, γ-butyrolactone, ethylene carbonate, sulfolane, dioxolane, tetrahydrofuran, 2-methyltetrahydrofuran, dimethylsulfoxide, 1,2-dimethoxyethane, 1,2-ethoxymethoxyethane, polyethylene glycol, alcohols, mixed solvents of these, and the like.

Further, various ionic liquids having the following cationic components and anionic components may also be used. Ionic liquids are not particularly specified and generally studied and reported materials may be appropriately used. Some organic ionic liquids exhibit a liquid state in a wide temperature range including room temperature; the organic ionic liquids include a cationic component and an anionic component.

Examples of the cationic component include imidazole derivatives such as N,N-dimethylimidazole salt, N,N-methylethylimidazole salt and N,N-methylpropylimidazole salt; N,N-dimethylpyridinium salt, N,N-methyl and pyridinium derivatives such as propyl pyridinium salt; aliphatic quaternary ammonium compounds such as tetraalkylammonium such as trimethylpropylammonium salt, trimethylhexylammonium salt, triethylhexylammonium salt, and the like.

The anionic component is preferably a compound containing fluorine in terms of stability in the atmosphere, such as BF₄-, CF₃SO₃-, PF₄-, (CF₃SO₂)₂N-, B(CN₄)- and the like.

The content of the electrolyte salt is not particularly specified and may be appropriately selected according to the purpose. The content of the electrolyte salt is preferably 0.7 mol/L or more and 4 mol/L or less in the nonaqueous solvent, and is more preferably 1.0 mol/L or more and 3 mol/L or less in the nonaqueous solvent. The content of the electrolyte salt is more preferably 1.0 mol/L or more and 2.5 mol/L or less in the nonaqueous solvent, from the viewpoint of compatibility between capacity and power of the storage element.

### PRODUCTION METHOD OF NONAQUEOUS ELECTROLYTE STORAGE ELEMENT

### PREPARATION OF NEGATIVE ELECTRODE AND POSITIVE ELECTRODE

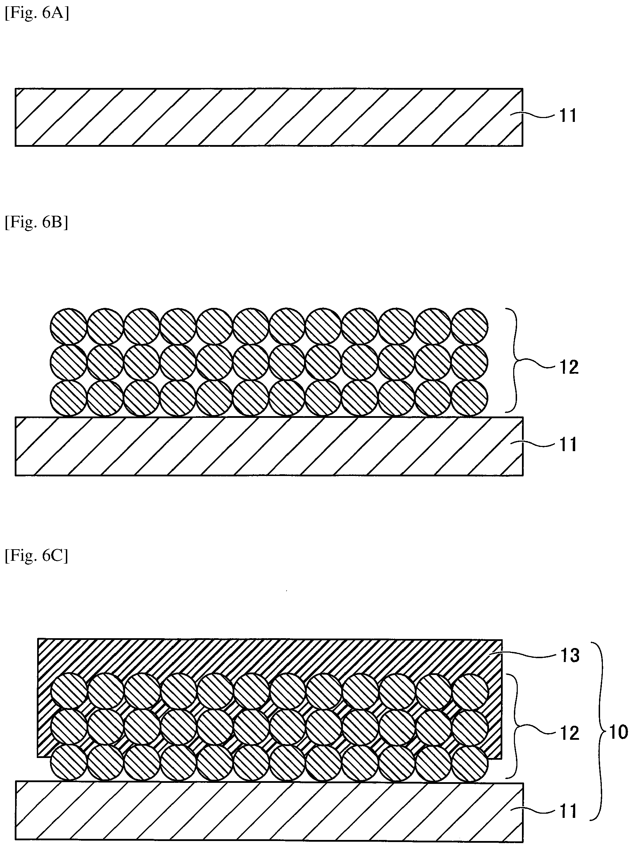

First, a negative electrode 10 is prepared as illustrated in FIGS. 6A to 6C. Specifically, first, as depicted in FIG. 6A, a negative electrode base 11 is prepared. The material and the like for the negative electrode base 11 are as described above.

Next, as depicted in FIG. 6B, a negative electrode mixture layer 12 is formed on the negative electrode base 11. Specifically, for example, a negative electrode active material such as graphite particles and a thickener such as cellulose are uniformly dispersed in water using an acrylic resin or the like as a binder to prepare a negative electrode active material dispersion. Then, the prepared negative electrode active material dispersion is applied onto the negative electrode base 11, and the obtained coating film is dried and pressed to produce the negative electrode mixture layer 12.

Next, as depicted in FIG. 6C, a porous insulating layer 13 is formed on the negative electrode mixture layer 12. The porous insulating layer 13 may, for example, be produced by dissolving a polymerization initiator to be activated by light or heat and a precursor containing a polymerizable compound in a liquid to prepare a material (an ink or the like); applying the prepared material onto the negative electrode mixture layer 12 acting as an underlayer; applying light or heat to the applied material to promote polymerization; and drying the liquid.

Specifically, a predetermined solution is prepared as an ink for forming a porous insulating layer, and the predetermined solution is applied onto the negative electrode mixture layer 12 using a dispenser method, a die coat method, an inkjet printing method, or the like. After the application of ink (the predetermined solution) is completed, the ink is cured by ultraviolet irradiation or the like, and thereafter, the ink is heated on a hot plate or the like for a predetermined time to form the porous insulating layer 13. The polymerizable compound exhibits compatibility with the liquid. Hence, as polymerization progresses, the compatibility with the liquid decreases to cause phase separation in the material.

As a result, the negative electrode 10 is completed. In the completed negative electrode 10, at least a part of the porous insulating layer 13 is present inside the negative electrode mixture layer 12 and is integrated with the surface of the active material constituting the negative electrode mixture layer 12.

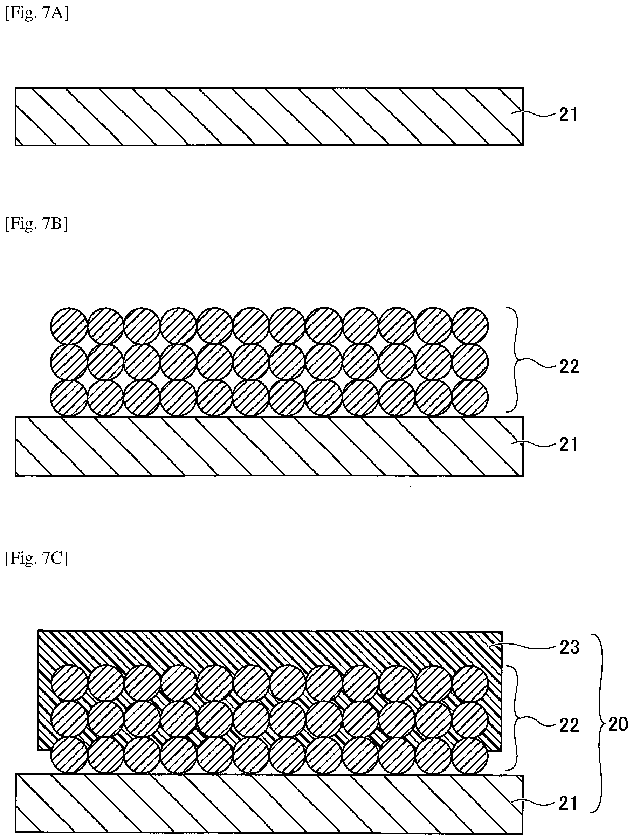

Next, a positive electrode 20 is prepared as illustrated in FIGS. 7A to 7C. Specifically, first, as illustrated in FIG. 7A, a positive electrode base 21 is prepared. The material and the like for the positive electrode base 21 are as described above.

Next, as depicted in FIG. 7B, a positive electrode mixture layer 22 is formed on or above the positive electrode base 21. Specifically, a positive electrode active material such as mixed particles of nickel, cobalt, and aluminum, a conductive auxiliary agent such as Ketjen black, and a binder resin such as polyvinylidene fluoride are dissolved in a solvent such as N-methylpyrrolidone, and are then uniformly dispersed to prepare a positive electrode active material dispersion. Then, the prepared positive electrode active material dispersion is applied onto the positive electrode base 21, and the obtained coating film is dried and pressed to produce the positive electrode mixture layer 22.

Next, as depicted in FIG. 7C, a porous insulating layer 23 is formed on the positive electrode mixture layer 22. The porous insulating layer 23 may, for example, be produced, in a similar manner as the porous insulating layer 13; the porous insulating layer 23 may be produced by dissolving, in a liquid, a precursor containing a polymerization initiator to be activated by light or heat and a polymerizable compound to thereby prepare a material (ink or the like); applying the prepared material onto the positive electrode mixture layer 22 acting as an underlayer; applying light or heat to the applied material; and drying the liquid.

Specifically, a predetermined solution is prepared as an ink for forming a porous insulating layer, and the prepared solution is applied onto the positive electrode mixture layer 22 using a dispenser method, a die coat method, an inkjet printing method, or the like. After the application of the prepared solution onto the positive electrode mixture layer 22 is completed, the ink is cured by ultraviolet irradiation or the like, and thereafter, the ink is heated on a hot plate or the like for a predetermined time to form the porous insulating layer 23. The polymerizable compound exhibits compatibility with the liquid; as the polymerization progresses, the compatibility with the liquid decreases to cause phase separation in the material.

As a result, the positive electrode 20 is completed. In the completed positive electrode 20, at least a part of the porous insulating layer 23 is present inside the positive electrode mixture layer 22 and is integrated with the surface of the active material constituting the positive electrode mixture layer 22.

### PREPARATION OF ELECTRODE ELEMENT AND NONAQUEOUS ELECTROLYTE STORAGE ELEMENT

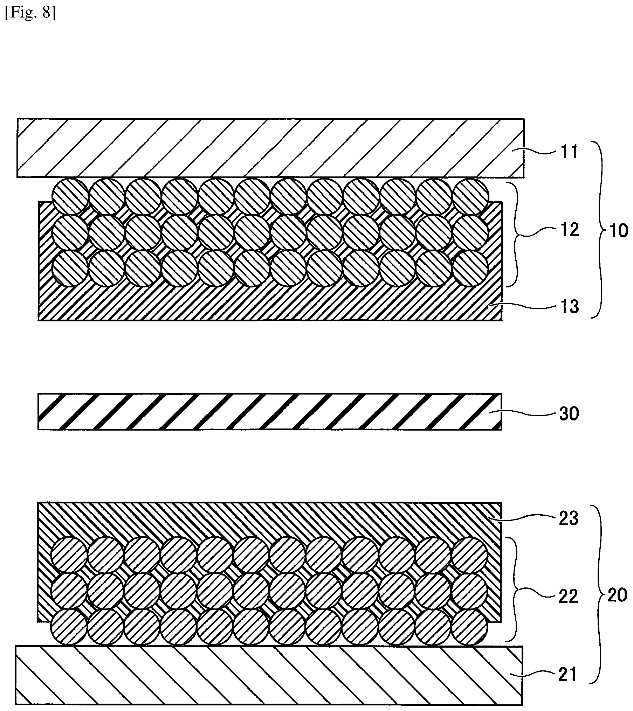

Next, an electrode element and a nonaqueous electrolyte storage element are prepared. First, as depicted in FIG. 8, the negative electrode 10 is disposed above the positive electrode 20 such that the porous insulating layer 13 of the negative electrode 10 and the porous insulating layer 23 of the positive electrode 20 face each other via the separator 30 made of a polypropylene microporous film or the like. Next, the negative electrode lead wire 41 is joined to the negative electrode base 11 by welding or the like, and the positive electrode lead wire 42 is joined to the positive electrode base 21 by welding or the like, thereby producing the electrode element 40 depicted in FIG. 3. Next, a nonaqueous electrolyte is injected into the electrode element 40 to form an electrolyte layer 51, and the electrolyte layer 51 is sealed with an outer package 52, thereby producing the nonaqueous electrolyte storage element 1 depicted in FIG. 4.

As described above, in the negative electrode 10 used in the nonaqueous electrolyte storage element 1 according to the present embodiment, at least a part of the porous insulating layer 13 is present inside the negative electrode mixture layer 12 and is integrated with the surface of the active material. Likewise, in the positive electrode 20, at least a part of the porous insulating layer 23 is present inside the positive electrode mixture layer 22 and is integrated with the surface of the active material.

With such an electrode structure, the resin constituting the porous insulating layers 13 and 23 melts or softens to cling to the surface of the active material at the time of shutdown, thereby forming a partition wall between the electrolyte and the active material. As a result, since the reaction between the electrolyte and the active material is reduced, it is possible to produce an electrode having high safety and excellent in controlling thermal runaway.

In the negative electrode 10 and the positive electrode 20 used in the nonaqueous electrolyte storage element 1 according to the present embodiment, the porous insulating layers 13 and 23 may be prepared by irradiating a predetermined material with light or heat. Accordingly, the productivity for the porous insulating layers 13 and 23 may be improved.

Note that in the related art, the functional layer having the shutdown effect is applied to a resin separator having a film shape or a porous resin layer formed on the active material. Hence, even if the functional layer melts or softens at the time of shutdown, the high viscosity polymer will not penetrate into the electrode mixture layers; accordingly, it is difficult to expect a sufficient thermal runaway control effect to completely hinder the reaction inside the electrode mixture layers.

### MODIFICATION 1 OF FIRST EMBODIMENT

A modification 1 of the first embodiment illustrates an example of an electrode element having a structure differing from that of the first embodiment. Note that the description of the same components illustrated in the previously described embodiment may be omitted from the modification 1 of the first embodiment.

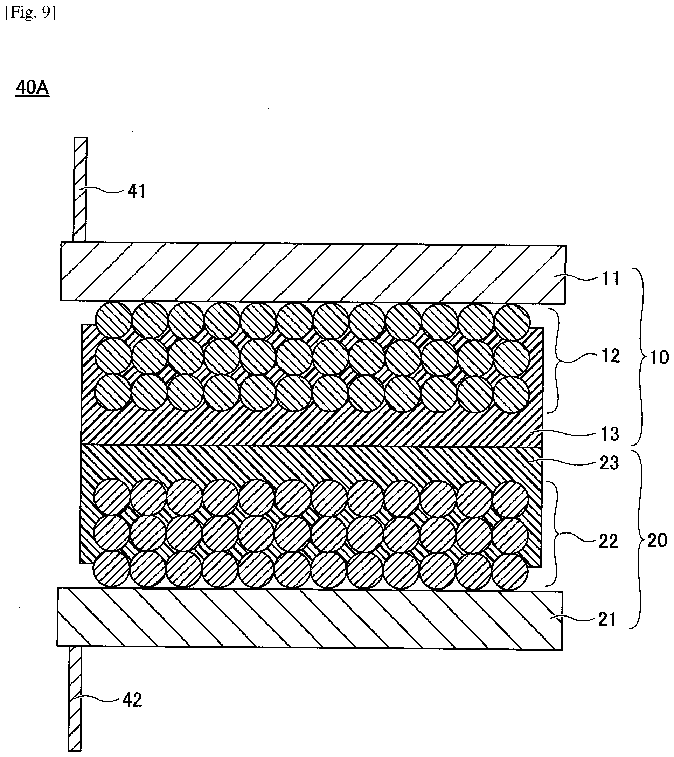

FIG. 9 is a cross-sectional view illustrating an electrode element used for a nonaqueous electrolyte storage element according to the modification 1 of the first embodiment. Referring to FIG. 9, an electrode element 40A has a structure in which the negative electrode 10 and the positive electrode 20 are laminated such that the porous insulating layer 13 and the porous insulating layer 23 are in direct contact and the negative electrode base 11 and the positive electrode base 21 face outward. A negative electrode lead wire 41 is connected to the negative electrode base 11. A positive electrode lead wire 42 is connected to the positive electrode base 21.

That is, the electrode element 40A differs from the electrode element 40 in that the electrode element 40A does not have a separator 30 (see FIG. 3). A nonaqueous electrolyte storage element may be prepared by injecting a nonaqueous electrolyte into the electrode element 40A to form the electrolyte layer 51, which is then sealed with the outer package 52.

In this way, the negative electrode 10 and the positive electrode 20 are laminated such that the porous insulating layer 13 and the porous insulating layer 23 are in direct contact with each other, which enables the porous insulating layer 13 and the porous insulating layer 23 to function as a separator; hence, it may be possible to omit a separator 30 (see FIG. 3). As a result, the production cost of the electrode element 40A may be reduced.

The following illustrates the nonaqueous electrolyte storage element and the like more specifically with reference to examples and comparative examples; however, the present invention is not limited to these examples.

### EXAMPLES 1 TO 4, AND COMPARATIVE EXAMPLES 1 TO 7

### EXAMPLE 1

The negative electrode 10, the positive electrode 20, the electrode element 40, and the nonaqueous electrolyte electric storage element 1 were prepared by the following to .

### PREPARATION OF INK

The following solution was prepared as an ink for forming an insulating layer.
- Tricyclodecanedimethanol diacrylate (Daicel-Ornix Corporation): 49 parts by mass
- Dipropylene glycol monomethyl ether (manufactured by Kanto Chemical Co., Ltd.): 50 parts by mass
- Irgacure 184 (manufactured by BASF): 1 part by mass

### PREPARATION OF NEGATIVE ELECTRODE 10

97 parts by mass of graphite particles (mean particle size: 10 µm) as a negative electrode active material, 1 part by mass of cellulose as a thickener, and 2 parts by mass of an acrylic resin as a binder were uniformly dispersed in water to prepare a negative electrode active material dispersion. This dispersion was applied to a copper foil having a thickness of 8 µm as a negative electrode base 11, and the obtained coating film was dried at 120°C for 10 minutes and was then pressed to prepare a negative electrode mixture layer 12 having a thickness of 60 µm. Finally, cutting was performed with 50 mm × 33 mm.

Next, the ink prepared in was applied onto the negative electrode mixture layer 12 using a dispenser. After 1 minute elapsed from application completion, the ink was cured by ultraviolet irradiation under a N₂ atmosphere and then heated at 120°C for 1 minute on a hot plate to remove the porogen, and the negative electrode 10 having an insulating layer (referred to as an "insulating 13A") was prepared.

### PREPARATION OF POSITIVE ELECTRODE 20

94 parts by mass of mixed particles of nickel, cobalt and aluminum as a positive electrode active material, 3 parts by mass of Ketjen black as a conductive auxiliary agent and 3 parts by mass of polyvinylidene fluoride as a binder resin were uniformly dispersed in N-methylpyrrolidone as a solvent to prepare a positive electrode active material dispersion. This dispersion was applied to an aluminum foil having a thickness of 15 µm as a positive electrode base 21, and the obtained coating film was dried at 120°C for 10 minutes and was then pressed to prepare a positive electrode mixture layer 22 having a thickness of 50 µm. Finally, cutting was performed with 43 mm × 29 mm.

Next, the ink prepared in was applied onto the positive electrode mixture layer 22 using a dispenser, and the positive electrode 20 having an insulating layer (referred to as an "insulating layer 23A") was prepared in the same manner as in.

### PREPARATION OF ELECTRODE ELEMENT 40 AND NONAQUEOUS ELECTROLYTE STORAGE ELEMENT 1

The negative electrode 10 was arranged so as to face the positive electrode 20 via a separator 30 made of a polypropylene microporous film having a thickness of 25 µm. Specifically, the negative electrode 10 was disposed above the positive electrode 20 such that the insulating layer 13A of the negative electrode 10 and the insulating layer 23A of the positive electrode 20 faced each other via the separator 30 made of a polypropylene microporous film. Next, the negative electrode lead wire 41 was joined to the negative electrode base 11 by welding or the like, and a positive electrode lead wire 42 was joined to the positive electrode base 21 by welding or the like, thereby preparing an electrode element 40. Next, a 1.5 M LiPF₆ (EC:DMC = 1:1) electrolyte was injected as a nonaqueous electrolyte into the electrode element 40 to form an electrolyte layer 51, and the electrolyte layer 51 was then sealed with a laminate outer package material as an outer package 52, thereby preparing a nonaqueous electrolyte storage element 1.

As a result of SEM observation, it was found that the insulating layers 13A and 23A obtained in Example 1 were observed to have pores with a size of approximately 0.1 to 1.0 µm. That is, the SEM observation results indicated that the insulating layers 13A and 23A prepared were porous insulating layers.

Next, in the ink for forming an insulating layer prepared in Example 1, a viscosity measurement test was conducted as Test 1. The conducted test and evaluation method are as follows. The results are illustrated in Table 1 below.

### TEST 1: VISCOSITY MEASUREMENT TEST

In order to investigate the permeability into the electrode mixture layer of the prepared ink for forming an insulating layer, viscosity measurement was carried out using a Modular Compact Rheometer (manufactured by Anton Paar). The measurement results were evaluated according to the following criteria.

### [EVALUATION CRITERIA]

o: 5 or more and less than 30 mPa·s
△: 30 or more and less than 150 mPa·s
×: 150 mPa·s or more

Next, with respect to the nonaqueous electrolyte storage element 1 of Example 1, an impedance measurement test was conducted as Test 2. The conducted test and evaluation method are as follows. The results are illustrated in Table 1 below.

### TEST 2: IMPEDANCE MEASUREMENT TEST

In order to compare the degree of the resistance component of the prepared porous insulating layer with respect to the produced nonaqueous electrolyte storage element 1, first, a nonaqueous electrolyte storage element (referred to as a "nonaqueous electrolyte storage element IX", for convenience) was prepared using a negative electrode and a positive electrode each not having a porous insulating layer.

With respect to the nonaqueous electrolyte storage element IX, impedance was measured at a frequency of 1 kHz as reference data, and the measured resistance value was approximately 250 mΩ. Based on this measurement, impedance between the negative electrode 10 and the positive electrode 20 of the nonaqueous electrolyte storage element 1 was measured under the following measurement conditions. The obtained results were evaluated based on the reference according to the following criteria.

### [EVALUATION CRITERIA]

o: less than 375 mΩ (less than 1.5 times the reference value)
△: 375 mΩ or more and less than 500 mΩ (1.5 times to 2 times the reference value)
×: 500 mΩ or more (more than twice the reference value)

### EXAMPLE 2

### PREPARATION OF INK

The following solution was prepared as an ink for forming an insulating layer.
- Tricyclodecanedimethanol diacrylate (Daicel-Ornix Corporation): 29 parts by mass
- Dipropylene glycol monomethyl ether (manufactured by Kanto Chemical Co., Ltd.): 70 parts by mass
- Irgacure 184 (manufactured by BASF): 1 part by mass

After the preparation of the ink, a nonaqueous electrolyte storage element 1 was prepared in the same manner as in to described in Example 1.

As a result of SEM observation, it was found that the insulating layers 13A and 23A obtained in Example 2 were observed to have pores with a size of approximately 0.1 to 1.0 µm. That is, the SEM observation results indicated that the insulating layers 13A and 23A prepared were porous insulating layers.

Next, the viscosity measurement test and the impedance measurement test were performed on the ink for forming an insulating layer produced in Example 2 and on the nonaqueous electrolyte storage element 1 produced in Example 2, in the same manner as in Example 1. The results are illustrated in Table 1 below.

### COMPARATIVE EXAMPLE 1

### PREPARATION OF INK

The following solution was prepared as an ink for forming an insulating layer.
- Tricyclodecanedimethanol diacrylate (Daicel-Ornix Corporation): 69 parts by mass
- Dipropylene glycol monomethyl ether (manufactured by Kanto Chemical Co., Ltd.): 30 parts by mass
- Irgacure 184 (manufactured by BASF): 1 part by mass

After the preparation of the ink, a nonaqueous electrolyte storage element 1 was prepared in the same manner as in to described in Example 1.

As a result of SEM observation, it was found that the insulating layers obtained in Comparative Example 1 were not formed with pores.

Next, the viscosity measurement test and the impedance measurement test were performed on the ink for forming an insulating layer produced in Comparative Example 1 and the nonaqueous electrolyte storage element 1 produced in Comparative Example 1, in the same manner as in Example 1. The results are illustrated in Table 1 below.

### COMPARATIVE EXAMPLE 2

### PREPARATION OF INK

The following solution was prepared as an ink for forming an insulating layer.
- Tricyclodecanedimethanol diacrylate (Daicel-Ornix Corporation): 49 parts by mass
- Cyclohexanone (manufactured by Kanto Chemical Co., Ltd.): 50 parts by mass
- Irgacure 184 (manufactured by BASF): 1 part by mass

After the preparation of the ink, a nonaqueous electrolyte storage element 1 was prepared in the same manner as in to described in Example 1.

As a result of SEM observation, it was found that the insulating layers obtained in Comparative Example 2 were not formed with pores.

Next, the viscosity measurement test and the impedance measurement test were performed on the ink for forming an insulating layer produced in Comparative Example 2 and the nonaqueous electrolyte storage element produced in Comparative Example 2, in the same manner as in Example 1. The results are illustrated in Table 1 below.

### COMPARATIVE EXAMPLE 3

### PREPARATION OF INK

The following solution was prepared as an ink for forming an insulating layer.
- Tricyclodecanedimethanol diacrylate (Daicel-Ornix Corporation): 29 parts by mass
- Cyclohexanone (manufactured by Kanto Chemical Co., Ltd.): 70 parts by mass
- Irgacure 184 (manufactured by BASF): 1 part by mass

After the preparation of the ink, a nonaqueous electrolyte storage element was prepared in the same manner as in to described in Example 1.

As a result of SEM observation, it was found that the insulating layers obtained in Comparative Example 3 were not formed with pores.

Next, the viscosity measurement test and the impedance measurement test were performed on the ink for forming an insulating layer produced in Comparative Example 3 and the nonaqueous electrolyte storage element produced in Comparative Example 3, in the same manner as in Example 1. The results are illustrated in Table 1 below.

### EXAMPLE 3

The negative electrode 10, the positive electrode 20, the electrode element 40, and the nonaqueous electrolyte electric storage element 1 were prepared by the following to .

### PREPARATION OF INK

The following solution was prepared as an ink for forming an insulating layer.
- Tricyclodecanedimethanol diacrylate (Daicel-Ornix Corporation): 49 parts by mass
- Dipropylene glycol monomethyl ether (manufactured by Kanto Chemical Co., Ltd.): 50 parts by mass
- AIBN (Wako Pure Chemical Industries, Ltd.): 1 part by mass

### PREPARATION OF NEGATIVE ELECTRODE 10

A negative electrode mixture layer 12 was formed on the negative electrode base 11 in a similar manner as Example 1, and the ink prepared in was applied onto the negative electrode mixture layer 12 with a dispenser. After 1 minute elapsed from the completion of the application, the ink was heated at 70°C under a N₂ atmosphere to be cured and was then heated at 1200°C for 1 minute on a hot plate to remove the porogen, thereby preparing a negative electrode 10 having an insulating layer 13A.

### PREPARATION OF POSITIVE ELECTRODE 20

A positive electrode mixture layer 22 was formed on the positive electrode base 21 in the same manner as in Example 1, the ink prepared in was applied onto the positive electrode mixture layer 22 using a dispenser, and the positive electrode 20 having an insulating layer 23A was prepared in the same manner as in .

### PREPARATION OF ELECTRODE ELEMENT 40 AND NONAQUEOUS ELECTROLYTE STORAGE ELEMENT 1

The negative electrode 10 was arranged so as to face the positive electrode 20 via a separator 30 made of a polypropylene microporous film having a thickness of 25 µm. Specifically, the negative electrode 10 was disposed above the positive electrode 20 such that the insulating layer 13A of the negative electrode 10 and the insulating layer 23A of the positive electrode 20 faced each other via the separator 30 made of a polypropylene microporous film. Next, the negative electrode lead wire 41 was joined to the negative electrode base 11 by welding or the like, and the positive electrode lead wire 42 was joined to the positive electrode base 21 by welding or the like, thereby preparing an electrode element 40. Next, a 1.5 M LiPF₆ (EC:DMC = 1:1) electrolyte was injected as a nonaqueous electrolyte into the electrode element 40 to form an electrolyte layer 51, and the electrolyte layer 51 was then sealed with a laminate outer package material as an outer package 52, thereby preparing a nonaqueous electrolyte storage element 1.

As a result of SEM observation, it was found that the insulating layers 13A and 23A obtained in Example 3 were observed to have pores with a size of approximately 0.1 to 1.0 µm. That is, the SEM observation results indicated that the insulating layers 13A and 23A prepared were porous insulating layers.

Next, the viscosity measurement test and the impedance measurement test were performed on the ink for forming an insulating layer produced in Example 3 and on the nonaqueous electrolyte storage element 1 produced in Example 3, in the same manner as in Example 1. The results are illustrated in Table 1 below.

### EXAMPLE 4

### PREPARATION OF INK

The following solution was prepared as an ink for forming an insulating layer.
- Tricyclodecanedimethanol diacrylate (Daicel-Ornix Corporation): 29 parts by mass
- Dipropylene glycol monomethyl ether (manufactured by Kanto Chemical Co., Ltd.): 70 parts by mass
- AIBN (Wako Pure Chemical Industries, Ltd.): 1 part by mass

After the preparation of the ink, a nonaqueous electrolyte storage element was prepared in the same manner as in to described in Example 3.

As a result of SEM observation, it was found that the insulating layers 13A and 23A obtained in Example 4 were observed to have pores with a size of approximately 0.1 to 1.0 µm. That is, the SEM observation results indicated that the insulating layers 13A and 23A prepared were porous insulating layers.

Next, the viscosity measurement test and the impedance measurement test were performed on the ink for forming an insulating layer produced in Example 4 and on the nonaqueous electrolyte storage element 1 produced in Example 4, in the same manner as in Example 1. The results are illustrated in Table 1 below.

### COMPARATIVE EXAMPLE 4

### PREPARATION OF INK

The following solution was prepared as an ink for forming an insulating layer.
- Tricyclodecanedimethanol diacrylate (Daicel-Ornix Corporation): 69 parts by mass
- Dipropylene glycol monomethyl ether (manufactured by Kanto Chemical Co., Ltd.): 30 parts by mass
- AIBN (Wako Pure Chemical Industries, Ltd.): 1 part by mass

After the preparation of the ink, a nonaqueous electrolyte storage element 1 was prepared in the same manner as in to described in Example 3.

As a result of SEM observation, it was found that the insulating layers obtained in Comparative Example 4 were not formed with pores.

Next, the viscosity measurement test and the impedance measurement test were performed on the ink for forming an insulating layer produced in Comparative Example 4 and the nonaqueous electrolyte storage element 4 produced in Comparative Example 4, in the same manner as in Example 1. The results are illustrated in Table 1 below.

### COMPARATIVE EXAMPLE 5

### PREPARATION OF INK

The following solution was prepared as an ink for forming an insulating layer.
- Tricyclodecanedimethanol diacrylate (Daicel-Ornix Corporation): 49 parts by mass
- Cyclohexanone (manufactured by Kanto Chemical Co., Ltd.): 50 parts by mass
- AIBN (Wako Pure Chemical Industries, Ltd.): 1 part by mass

After the preparation of the ink, a nonaqueous electrolyte storage element 1 was prepared in the same manner as in to described in Example 3.

As a result of SEM observation, it was found that the insulating layers obtained in Comparative Example 5 were not formed with pores.

Next, the viscosity measurement test and the impedance measurement test were performed on the ink for forming an insulating layer produced in Comparative Example 5 and the nonaqueous electrolyte storage element 5 produced in Comparative Example 5, in the same manner as in Example 1. The results are illustrated in Table 1 below.

### COMPARATIVE EXAMPLE 6

### PREPARATION OF INK

The following solution was prepared as an ink for forming an insulating layer.
- Tricyclodecanedimethanol diacrylate (Daicel-Ornix Corporation): 29 parts by mass
- Cyclohexanone (manufactured by Kanto Chemical Co., Ltd.): 70 parts by mass
- AIBN (Wako Pure Chemical Industries, Ltd.): 1 part by mass

After the preparation of the ink, a nonaqueous electrolyte storage element 1 was prepared in the same manner as in to described in Example 3.

As a result of SEM observation, it was found that the insulating layers obtained in Comparative Example 6 were not formed with pores.

Next, the viscosity measurement test and the impedance measurement test were performed on the ink for forming an insulating layer produced in Comparative Example 6 and the nonaqueous electrolyte storage element 6 produced in Comparative Example 6, in the same manner as in Example 1. The results are illustrated in Table 1 below.

### COMPARATIVE EXAMPLE 7

### PREPARATION OF INK

The following solution was prepared as an ink for forming an insulating layer.
- Polymethylmethacrylate: 15 parts by mass
- Cyclohexanone (manufactured by Kanto Chemical Co., Ltd.): 61 parts by mass
- Dipropylene glycol monomethyl ether (manufactured by Kanto Chemical Co., Ltd.): 24 parts by mass

### PREPARATION OF NEGATIVE ELECTRODE

A negative electrode mixture layer was formed on a negative electrode base in a similar manner as Example 1, and the ink prepared in was applied onto the negative electrode mixture layer by a die coating method. After 1 minute elapsed from the completion of the application, the ink applied was heated at 120°C for 1 minute on a hot plate to prepare a negative electrode having an insulating layer.

### PREPARATION OF POSITIVE ELECTRODE

A positive electrode mixture layer was formed on a positive electrode base in the same manner as in Example 1, the ink prepared in was applied onto the positive electrode mixture layer using a dispenser, and the positive electrode having an insulating layer was prepared in the same manner as in.

### PREPARATION OF ELECTRODE ELEMENT AND NONAQUEOUS ELECTROLYTE

### STORAGE ELEMENT

The negative electrode 10 was arranged so as to face the positive electrode via a separator made of a polypropylene microporous film having a thickness of 25 µm. Specifically, the negative electrode 10 was disposed above the positive electrode 20 such that the porous insulating layer 13 of the negative electrode 10 and the porous insulating layer 23 of the positive electrode 20 faced each other via the separator 30 made of a polypropylene microporous film. Next, a negative electrode lead wire 41 was joined to the negative electrode base 11 by welding or the like, and a positive electrode lead wire 42 was joined to the positive electrode base 21 by welding or the like, thereby preparing an electrode element. Next, a 1.5 M LiPF₆ (EC:DMC = 1:1) electrolyte was injected as a nonaqueous electrolyte into the electrode element to form an electrolyte layer, and the electrolyte layer obtained was sealed using a laminate outer package material as an outer package, thereby preparing a nonaqueous electrolyte storage element.

As a result of SEM observation, it was found that the insulating layers obtained in Comparative Example 7 were observed to have pores with a size of approximately 0.1 to 1.0 µm.

Next, the viscosity measurement test and the impedance measurement test were performed on the ink for forming the porous insulating layer produced in Comparative Example 7 and the nonaqueous electrolyte storage element produced in Comparative Example 7, in the same manner as in Example 1. The results are illustrated in Table 1.

**[Table 1]**

| | TEST 1 | TEST 2 |
|---|---|---|
| EXAMPLE 1 | o | o |
| EXAMPLE 2 | o | o |
| COMPARATIVE EXAMPLE 1 | △ | △ |
| COMPARATIVE EXAMPLE 2 | o | x |
| COMPARATIVE EXAMPLE 3 | o | x |
| EXAMPLE 3 | o | o |
| EXAMPLE 4 | o | o |
| COMPARATIVE EXAMPLE 4 | △ | △ |
| COMPARATIVE EXAMPLE 5 | o | x |
| COMPARATIVE EXAMPLE 6 | o | x |
| COMPARATIVE EXAMPLE 7 | x | o |

The results in Table 1 indicate that the ink for forming an insulating layer of Examples 1 and 2 exhibited sufficient permeation into the active material. In addition, the results indicate that, due to pores of the porous insulating layer, the ink exhibited high permeability and high liquid retention performance of the electrolyte, and excellent impedance values.

The results indicate that the ink for forming a porous insulating layer of Comparative Example 1 exhibited the viscosity being higher than the preferable viscosity value, and an increasing tendency of impedance as compared to Examples 1 and 2. This may result from an increase in viscosity due to an increased proportion of monomers to porogen, and a decrease in electrolyte permeability and retention performance due to a decrease in size of pores of the porous insulating layer.

Furthermore, the ink of Comparative Example 2 and Comparative Example 3 exhibited favorable viscosity values but high impedance values. This may result from failing to obtain a phase separation porous film with sufficient permeability to electrolyte, due to high compatibility of porogen to the monomers used, and less phase separation progression with respect to polymerization progression.

The above indicates that the same discussion may apply to the ink of Examples 3 and 4, and the ink of Comparative Examples 4 to 6, etc. In the ink Examples 3 and 4, and the ink of Comparative Examples 4 to 6, etc., crosslinking was promoted by heat. This indicates that a porous insulating layer impregnated in an active material may be formed by selecting an ink with an appropriate monomer concentration and porogen.

Further, the results of Comparative Example 7 indicate that an insulating layer formed by dissolving polymers may form a porous body having pores; however, in this case, with an increase in ink viscosity, a porous insulating layer impregnated in an active material may fail to be obtained.

In the related art, the functional layer having a shutdown effect is applied to a resin separator having a film shape or a porous resin layer formed on the active material. Hence, even if the functional layer melts or softens at the time of shutdown, the high viscosity polymer will not penetrate in the electrode mixture layers. Accordingly, it is difficult to expect a sufficient thermal runaway control effect to completely hinder reactions inside the electrode mixture layers.

In contrast, the porous insulating layer formed in a state of being impregnated in the active material as in Examples 1 to 4, which will provide a nonaqueous electrolyte storage element with high safety and excellent inhibition effect on thermal runaway, and a method for producing such a nonaqueous electrolyte storage element, may be provided.

### EXAMPLES 5 TO 10, COMPARATIVE EXAMPLES 8 TO 19

### EXAMPLE 5

The negative electrode 10, the positive electrode 20, the electrode element 40, and the nonaqueous electrolyte electric storage element 1 were prepared by the following to .

### PREPARATION OF INK

The following solution was prepared as an ink for forming an insulating layer.
- Tricyclodecanedimethanol diacrylate (Daicel-Ornix Corporation): 49 parts by mass
- Dipropylene glycol monomethyl ether (manufactured by Kanto Chemical Co., Ltd.): 50 parts by mass
- Irgacure 184 (manufactured by BASF): 1 part by mass

### PREPARATION OF NEGATIVE ELECTRODE 10

97 parts by mass of graphite particles (mean particle size: 10 µm) as a negative electrode active material, 1 part by mass of cellulose as a thickener, and 2 parts by mass of an acrylic resin as a binder were uniformly dispersed in water to prepare a negative electrode active material dispersion. This dispersion was applied to a copper foil having a thickness of 8 µm as a negative electrode base 11, and the obtained coating film was dried at 120°C for 10 minutes and was then pressed to prepare a negative electrode mixture layer 12 having a thickness of 60 µm. Finally, cutting was performed with 50 mm × 33 mm.

Next, the ink prepared in was applied onto the negative electrode mixture layer 12 using a dispenser. After the application of the ink, the ink was cured by ultraviolet irradiation under a N₂ atmosphere and then heated at 120°C for 1 minute on a hot plate to remove the porogen, and the negative electrode 10 having an insulating layer 13A was prepared.

### PREPARATION OF POSITIVE ELECTRODE 20

94 parts by mass of mixed particles of nickel, cobalt and aluminum as a positive electrode active material, 3 parts by mass of Ketjen black as a conductive auxiliary agent and 3 parts by mass of polyvinylidene fluoride as a binder resin were uniformly dispersed in N-methylpyrrolidone as a solvent to prepare a positive electrode active material dispersion. This dispersion was applied to an aluminum foil having a thickness of 15 µm as a positive electrode base 21, and the obtained coating film was dried at 120°C for 10 minutes and was then pressed to prepare a positive electrode mixture layer 22 having a thickness of 50 µm. Finally, cutting was performed with 43 mm × 29 mm.

Next, the ink prepared in was applied onto the positive electrode mixture layer 22 using a dispenser, and the positive electrode 20 having an insulating layer 23A was prepared in the same manner as in.

### PREPARATION OF ELECTRODE ELEMENT 40 AND NONAQUEOUS ELECTROLYTE STORAGE ELEMENT 1

The negative electrode 10 was arranged so as to face the positive electrode 20 via a separator 30 made of a polypropylene microporous film having a thickness of 25 µm. Specifically, the negative electrode 10 was disposed above the positive electrode 20 such that the insulating layer 13A of the negative electrode 10 and the porous insulating layer 23 of the positive electrode 20 faced each other via the separator 30 made of a polypropylene microporous film. Next, a negative electrode lead wire 41 was joined to the negative electrode base 11 by welding or the like, and a positive electrode lead wire 42 was joined to the positive electrode base 21 by welding or the like, thereby preparing an electrode element 40. Next, a 1.5 M LiPF₆ (EC:DMC = 1:1) electrolyte was injected as a nonaqueous electrolyte into the electrode element 40 to form an electrolyte layer 51, and the electrolyte layer 51 was then sealed with a laminate outer package material as an outer package 52, thereby preparing a nonaqueous electrolyte storage element 1.

As a result of SEM observation, it was found that the insulating layers 13A and 23A obtained in Example 5 were observed to have pores with a size of approximately 0.1 to 10 µm. That is, the SEM observation results indicated that the insulating layers 13A and 23A prepared were porous insulating layers.

Next, with respect to the negative electrode and the positive electrode provided with the respective insulating layers 13A and 23A produced in Example 5, an adhesion measurement test was conducted as Test 3. The conducted test and evaluation method are as follows. The results are illustrated in Table 2 below.

### TEST : ADHESION MEASUREMENT TEST

The surface of the negative electrode having the insulating layer and the surface of the positive electrode having the insulating layer were fixed to a fixing tool and an acrylic pressure-sensitive adhesive tape was adhered to the top surfaces of the negative electrode and the positive electrode. The tape was then peeled off at a constant speed of 30 mm/min while maintaining the peel angle of 90°. The adhesion was determined based on the observation as to whether the peeled acrylic pressure-sensitive adhesive tape had a portion composed of the insulating layer alone. When the peeled acrylic pressure-sensitive adhesive tape had a portion composed of the insulating layer alone, it was considered that peeling had occurred between the electrode mixture layer and the insulating layer, and that adhesion at an interface between the electrode mixture layer and the insulating layer was thus weak. When the peeled acrylic pressure-sensitive adhesive tape did not have a portion composed of the insulating layer alone, it was determined that no peeling had occurred at the interface, and that the adhesion was thus strong. The measurement results were evaluated according to the following criteria.

### [EVALUATION CRITERIA]

o : Peeled tape had no portion composed of the insulating layer alone
× : Peeled tape had a portion composed of the insulating layer alone

Next, with respect to the nonaqueous electrolyte storage element 1 of Example 5, an electrolytic permeability test was conducted as Test 4. The conducted test and evaluation method are as follows. The results are illustrated in Table 2 below.

### TEST 4: ELECTROLYTIC PERMEABILITY TEST

5 µL of a mixed solvent of ethylene carbonate and dimethyl carbonate (volume ratio 1:1) was dripped onto the surface of the negative electrode provided with the insulating layer and also onto the surface of the positive electrode provided with the insulating layer, under an environment of 30°C, and complete permeation of the mixed solvent was then visually observed to measure a permeation time. The permeability of the electrolyte was evaluated by this permeation time.

### [EVALUATION CRITERIA]

o: permeated within 30 seconds
△: permeated within 30 seconds or more and 100 seconds or less
×: not permeated even after 100 seconds or more.

Next, with respect to the nonaqueous electrolyte storage element 1 of Example 5, a high temperature insulation measurement test was conducted as Test 5. The conducted test and evaluation method are as follows. The results are illustrated in Table 2 below.

### TEST 5: HIGH TEMPERATURE INSULATION MEASUREMENT TEST

In order to evaluate the insulation between the positive electrode and the negative electrode at high temperature in the produced nonaqueous electrolyte storage element 1, after the nonaqueous electrolyte storage element 1 was heated at 160°C for 15 minutes, the resistance value between the negative electrode 10 and the positive electrode 20 was then measured while maintaining the temperature at 160°C. The measurement results were evaluated according to the following criteria.

### [EVALUATION CRITERIA]

o: 40 MQ or more
△: 1 MΩ or more and less than 40 MΩ
×: less than 1 MΩ

### EXAMPLE 6

### PREPARATION OF INK

The following solution was prepared as an ink for forming an insulating layer.
- Tricyclodecanedimethanol diacrylate (Daicel-Ornix Corporation): 29 parts by mass
- Dipropylene glycol monomethyl ether (manufactured by Kanto Chemical Co., Ltd.): 70 parts by mass
- Irgacure 184 (manufactured by BASF): 1 part by mass

After the preparation of the ink, a nonaqueous electrolyte storage element 1 was prepared in the same manner as in to described in Example 5.

As a result of SEM observation, it was found that the insulating layers 13A and 23A obtained in Example 6 were observed to have pores with a size of approximately 0.1 to 10 µm. That is, the SEM observation results indicated that the insulating layers 13A and 23A prepared were porous insulating layers.

Next, Test 3 to Test 5 were conducted on the ink for forming an insulating layer produced in Example 6 and also on the nonaqueous electrolyte storage element 1 produced in Example 6, in the same manner as in Example 5. The results are illustrated in Table 2 below.

### COMPARATIVE EXAMPLE 8

The negative electrode 10, the positive electrode 20, the electrode element 40, and the nonaqueous electrolyte electric storage element 1 were prepared by the following to .

### PREPARATION OF NEGATIVE ELECTRODE 10

97 parts by mass of graphite particles (mean particle size: 10 µm) as a negative electrode active material, 1 part by mass of cellulose as a thickener, and 2 parts by mass of an acrylic resin as a binder were uniformly dispersed in water to prepare a negative electrode active material dispersion. This dispersion was applied to a copper foil having a thickness of 8 µm as a negative electrode base 11, and the obtained coating film was dried at 120°C for 10 minutes and was then pressed to prepare a negative electrode mixture layer 12 having a thickness of 60 µm. Finally, cutting was performed with 50 mm × 33 mm to prepare a negative electrode 10.

### PREPARATION OF POSITIVE ELECTRODE 20

94 parts by mass of mixed particles of nickel, cobalt and aluminum as a positive electrode active material, 3 parts by mass of Ketjen black as a conductive auxiliary agent and 3 parts by mass of polyvinylidene fluoride as a binder resin were uniformly dispersed in N-methylpyrrolidone as a solvent to prepare a positive electrode active material dispersion. This dispersion was applied to an aluminum foil having a thickness of 15 µm as a positive electrode base 21, and the obtained coating film was dried at 120°C for 10 minutes and was then pressed to prepare a positive electrode mixture layer 22 having a thickness of 50 µm.

Finally, cutting was performed with 43 mm × 29 mm to prepare a positive electrode 20.

### PREPARATION OF ELECTRODE ELEMENT 40 AND NONAQUEOUS ELECTROLYTE STORAGE ELEMENT 1

The negative electrode 10 was arranged so as to face the positive electrode 20 via a separator 30 made of a polypropylene microporous film having a thickness of 25 µm. Next, the negative electrode lead wire 41 was joined to the negative electrode base 11 by welding or the like, and the positive electrode lead wire 42 was joined to the positive electrode base 21 by welding or the like, thereby preparing an electrode element 40. Next, a 1.5 M LiPF₆ (EC:DMC = 1:1) electrolyte was injected as a nonaqueous electrolyte into the electrode element 40 to form an electrolyte layer 51, and the electrolyte layer 51 was then sealed with a laminate outer package material as an outer package 52, thereby preparing a nonaqueous electrolyte storage element 1.

Next, Test 3 to Test 5 were conducted on the nonaqueous electrolyte storage element 1 produced in Comparative Example 8, in the same manner as in Example 5. Note that Test 3 was omitted only in Comparative Example 8 because no insulating layer in contact with the electrode mixture layer was present. The results are illustrated in Table 2 below.

### COMPARATIVE EXAMPLE 9

### PREPARATION OF INK

The following solution was prepared as an ink for forming an insulating layer.
- Tricyclodecanedimethanol diacrylate (Daicel-Ornix Corporation): 69 parts by mass
- Dipropylene glycol monomethyl ether (manufactured by Kanto Chemical Co., Ltd.): 30 parts by mass
- Irgacure 184 (manufactured by BASF): 1 part by mass

After the preparation of the ink, a nonaqueous electrolyte storage element 1 was prepared in the same manner as in to described in Example 5.

As a result of SEM observation, it was found that the insulating layers obtained in Comparative Example 9 were not formed with pores.

Next, Test 3 to Test 5 were conducted on the ink for forming an insulating layer produced in Example 9 and on the nonaqueous electrolyte storage element 1 produced in Example 9, in the same manner as in Example 5. The results are illustrated in Table 2 below.

### COMPARATIVE EXAMPLE 10

The negative electrode 10, the positive electrode 20, the electrode element 40, and the nonaqueous electrolyte electric storage element 1 were prepared by the following to .

### PREPARATION OF INK

The following solution was prepared as an ink for forming an insulating layer.
- Alumina microparticles: 9 parts by mass
- Cyclohexanone (manufactured by Kanto Chemical Co., Ltd.): 90 parts by mass
- PVdF (manufactured by Kureha Corporation): 1 part by mass

### PREPARATION OF NEGATIVE ELECTRODE

A negative electrode mixture layer was formed on a negative electrode base in a similar manner as Example 5, and the ink prepared in was applied onto the negative electrode mixture layer by a die coating method. After 1 minute elapsed from the completion of the application, the ink applied was heated at 120°C for 1 minute on a hot plate to prepare a negative electrode having an insulating layer.

### PREPARATION OF POSITIVE ELECTRODE

A positive electrode mixture layer was formed on a positive electrode base in the same manner as in Example 5, the ink prepared in was applied onto the positive electrode mixture layer using a dispenser, and the positive electrode having an insulating layer was prepared in the same manner as in.

### PREPARATION OF ELECTRODE ELEMENT AND NONAQUEOUS ELECTROLYTE STORAGE ELEMENT

The negative electrode 10 was arranged so as to face the positive electrode via a separator made of a polypropylene microporous film having a thickness of 25 µm. Specifically, the negative electrode 10 was disposed above the positive electrode 20 such that the porous insulating layer 13 of the negative electrode 10 and the porous insulating layer 23 of the positive electrode 20 faced each other via the separator 30 made of a polypropylene microporous film. Next, a negative electrode lead wire 41 was joined to the negative electrode base 11 by welding or the like, and a positive electrode lead wire 42 was joined to the positive electrode base 21 by welding or the like, thereby preparing an electrode element. Next, a 1.5 M LiPF₆ (EC:DMC = 1:1) electrolyte was injected as a nonaqueous electrolyte into the electrode element to form an electrolyte layer, and the electrolyte layer obtained was sealed using a laminate outer package material as an outer package, thereby preparing a nonaqueous electrolyte storage element.

As a result of SEM observation, it was found that the porous insulating layers obtained in Comparative Example 10 were observed to have pores with a size of approximately 0.1 to 10 µm.

Next, Test 3 to Test 5 were conducted on the ink for forming an insulating layer produced in Example 10 and on the nonaqueous electrolyte storage element 1 produced in Example 10, in the same manner as in Example 5. The results are illustrated in Table 2 below.

### COMPARATIVE EXAMPLE 11

The negative electrode 10, the positive electrode 20, the electrode element 40, and the nonaqueous electrolyte electric storage element 1 were prepared by the following to.

### PREPARATION OF INK

Equimolar amounts of trimellitic anhydride (TMA) and 4,4'-diphenylmethane diisocyanate were reacted in the following mixed solvent to obtain 15% by mass of a polyamide-imide solution as an ink for forming an insulating layer.
- 1-methyl-2-pyrrolidone (manufactured by Tokyo Chemical Industry Co., Ltd.): 30 parts by mass
- tetraethylene glycol dimethyl ether (manufactured by Tokyo Chemical Industry Co., Ltd.): 70 parts by mass

### PREPARATION OF NEGATIVE ELECTRODE

A negative electrode mixture layer was formed on a negative electrode base in a similar manner as Example 5, and the ink prepared in was applied onto the negative electrode mixture layer by a die coating method. After 1 minute elapsed from the completion of the application, the ink applied was heated at 130°C for 10 minutes on a hot plate to prepare a negative electrode having an insulating layer.

### PREPARATION OF POSITIVE ELECTRODE

A positive electrode mixture layer was formed on a positive electrode base in the same manner as in Example 5, the ink prepared in was applied onto the positive electrode mixture layer using a dispenser, and the positive electrode having an insulating layer was prepared in the same manner as in.

### PREPARATION OF ELECTRODE ELEMENT AND NONAQUEOUS ELECTROLYTE STORAGE ELEMENT

The negative electrode 10 was arranged so as to face the positive electrode via a separator made of a polypropylene microporous film having a thickness of 25 µm. Specifically, the negative electrode 10 was disposed above the positive electrode 20 such that the porous insulating layer 13 of the negative electrode 10 and the porous insulating layer 23 of the positive electrode 20 faced each other via the separator 30 made of a polypropylene microporous film. Next, a negative electrode lead wire 41 was joined to the negative electrode base 11 by welding or the like, and a positive electrode lead wire 42 was joined to the positive electrode base 21 by welding or the like, thereby preparing an electrode element. Next, a 1.5 M LiPF₆ (EC:DMC = 1:1) electrolyte was injected as a nonaqueous electrolyte into the electrode element to form an electrolyte layer, and the electrolyte layer obtained was sealed using a laminate outer package material as an outer package, thereby preparing a nonaqueous electrolyte storage element.

As a result of SEM observation, it was found that the porous insulating layers obtained in Comparative Example 11 were observed to have pores with a size of approximately 0.1 to 10 µm.

Next, Test 3 to Test 5 were conducted on the ink for forming an insulating layer produced in Example 11 and on the nonaqueous electrolyte storage element 1 produced in Example 11, in the same manner as in Example 5. The results are illustrated in Table 2.

### COMPARATIVE EXAMPLE 12

### PREPARATION OF INK

The following solution was prepared as an ink for forming an insulating layer.
- Isobornyl acrylate (manufactured by Daicel-Ornix Corporation): 95 parts by mass
- Irgacure 184 (manufactured by BASF): 5 parts by mass

After the preparation of the ink, a nonaqueous electrolyte storage element 1 was prepared in the same manner as in to described in Example 5.

As a result of SEM observation, it was found that the insulating layers obtained in Comparative Example 12 were not formed with pores.

Next, Test 3 to Test 5 were conducted on the ink for forming an insulating layer produced in Example 12 and on the nonaqueous electrolyte storage element 1 produced in Example 12, in the same manner as in Example 5. The results are illustrated in Table 2 below.

### COMPARATIVE EXAMPLE 13

### PREPARATION OF INK

The following solution was prepared as an ink for forming an insulating layer.
- Tricyclodecanedimethanol diacrylate (Daicel-Ornix Corporation): 95 parts by mass
- Irgacure 184 (manufactured by BASF): 5 parts by mass

After the preparation of the ink, a nonaqueous electrolyte storage element 1 was prepared in the same manner as in to described in Example 5.

As a result of SEM observation, it was found that the insulating layers obtained in Comparative Example 13 were not formed with pores.

Next, Test 3 to Test 5 were conducted on the ink for forming an insulating layer produced in Example 13 and on the nonaqueous electrolyte storage element 1 produced in Example 13, in the same manner as in Example 5. The results are illustrated in Table 2 below.

### COMPARATIVE EXAMPLE 14

### PREPARATION OF INK

The following solution was prepared as an ink for forming an insulating layer.
- Tricyclodecanedimethanol diacrylate (Daicel-Ornix Corporation): 49 parts by mass
- Cyclohexanone (manufactured by Kanto Chemical Co., Ltd.): 50 parts by mass
- Irgacure 184 (manufactured by BASF): 1 part by mass

After the preparation of the ink, a nonaqueous electrolyte storage element 1 was prepared in the same manner as in to described in Example 5.

As a result of SEM observation, it was found that the insulating layers obtained in Comparative Example 14 were not formed with pores.

Next, Test 3 to Test 5 were conducted on the ink for forming an insulating layer produced in Example 14 and on the nonaqueous electrolyte storage element 1 produced in Example 14, in the same manner as in Example 5. The results are illustrated in Table 2 below.

### COMPARATIVE EXAMPLE 15

### PREPARATION OF INK

The following solution was prepared as an ink for forming an insulating layer.
- Tricyclodecanedimethanol diacrylate (Daicel-Ornix Corporation): 29 parts by mass
- Cyclohexanone (manufactured by Kanto Chemical Co., Ltd.): 70 parts by mass
- Irgacure 184 (manufactured by BASF): 1 part by mass

After the preparation of the ink, a nonaqueous electrolyte storage element 1 was prepared in the same manner as in to described in Example 5.

As a result of SEM observation, it was found that the insulating layers obtained in Comparative Example 15 were not formed with pores.

Next, Test 3 to Test 5 were conducted on the ink for forming an insulating layer produced in Example 15 and on the nonaqueous electrolyte storage element 1 produced in Example 15, in the same manner as in Example 5. The results are illustrated in Table 2 below.

### EXAMPLE 7

### PREPARATION OF INK

The following solution was prepared as an ink for forming an insulating layer.
- Tris(2-hydroxyethyl) isocyanurate triacrylate (manufactured by Arkema K.K.): 49 parts by mass
- Dipropylene glycol monomethyl ether (manufactured by Kanto Chemical Co., Ltd.): 50 parts by mass
- Irgacure 184 (manufactured by BASF): 1 part by mass

After the preparation of the ink, a nonaqueous electrolyte storage element 1 was prepared in the same manner as in to described in Example 5.

As a result of SEM observation, it was found that the insulating layers 13A and 23A obtained in Example 7 were observed to have pores with a size of approximately 0.1 to 10 µm. That is, the SEM observation results indicated that the insulating layers 13A and 23A prepared were porous insulating layers.

Next, Test 3 to Test 5 were conducted on the ink for forming an insulating layer produced in Example 7 and on the nonaqueous electrolyte storage element 1 produced in Example 7, in the same manner as in Example 5. The results are illustrated in Table 2 below.

### EXAMPLE 8

### PREPARATION OF INK

The following solution was prepared as an ink for forming an insulating layer.
- Tris(2-hydroxyethyl) isocyanurate triacrylate (manufactured by Arkema K.K.): 29 parts by mass
- Dipropylene glycol monomethyl ether (manufactured by Kanto Chemical Co., Ltd.): 70 parts by mass
- Irgacure 184 (manufactured by BASF): 1 part by mass

After the preparation of the ink, a nonaqueous electrolyte storage element 1 was prepared in the same manner as in to described in Example 5.

As a result of SEM observation, it was found that the insulating layers 13A and 23A obtained in Example 8 were observed to have pores with a size of approximately 0.1 to 10 µm. That is, the SEM observation results indicated that the insulating layers 13A and 23A prepared were porous insulating layers.

Next, Test 3 to Test 5 were conducted on the ink for forming an insulating layer produced in Example 8 and on the nonaqueous electrolyte storage element 1 produced in Example 8, in the same manner as in Example 5. The results are illustrated in Table 2 below.

### COMPARATIVE EXAMPLE 16

### PREPARATION OF INK

The following solution was prepared as an ink for forming an insulating layer.
- Tris(2-hydroxyethyl) isocyanurate triacrylate (manufactured by Arkema K.K.): 49 parts by mass
- Cyclohexanone (manufactured by Kanto Chemical Co., Ltd.): 50 parts by mass
- Irgacure 184 (manufactured by BASF): 1 part by mass

After the preparation of the ink, a nonaqueous electrolyte storage element 1 was prepared in the same manner as in to described in Example 5.

As a result of SEM observation, it was found that the insulating layers obtained in Comparative Example 16 were not formed with pores having a size of approximately 0.1 to 10 µm.

Next, Test 3 to Test 5 were conducted on the ink for forming an insulating layer produced in Example 16 and on the nonaqueous electrolyte storage element 1 produced in Example 16, in the same manner as in Example 5. The results are illustrated in Table 2 below.

### COMPARATIVE EXAMPLE 17

### PREPARATION OF INK

The following solution was prepared as an ink for forming an insulating layer.
- Tris(2-hydroxyethyl) isocyanurate triacrylate (manufactured by Arkema K.K.): 29 parts by mass
- Cyclohexanone (manufactured by Kanto Chemical Co., Ltd.): 70 parts by mass
- Irgacure 184 (manufactured by BASF): 1 part by mass

After the preparation of the ink, a nonaqueous electrolyte storage element 1 was prepared in the same manner as in to described in Example 5.

As a result of SEM observation, it was found that the insulating layers obtained in Comparative Example 17 were not formed with pores having a size of approximately 0.1 to 10 µm.

Next, Test 3 to Test 5 were conducted on the ink for forming an insulating layer produced in Example 17 and on the nonaqueous electrolyte storage element 1 produced in Example 17, in the same manner as in Example 5. The results are illustrated in Table 2 below.

### EXAMPLE 9

The negative electrode 10, the positive electrode 20, the electrode element 40, and the nonaqueous electrolyte electric storage element 1 were prepared by the following to .

### PREPARATION OF INK

The following solution was prepared as an ink for forming an insulating layer.
- Tricyclodecanedimethanol diacrylate (Daicel-Ornix Corporation): 49 parts by mass
- Tetradecane (FUJIFILM Wako Chemical Corporation): 50 parts by mass
- AIBN (Wako Pure Chemical Industries, Ltd.): 1 part by mass

### PREPARATION OF NEGATIVE ELECTRODE 10

A negative electrode mixture layer 12 was formed on the negative electrode base 11 in a similar manner as Example 1, and the ink prepared in was applied onto the negative electrode mixture layer 12 with a dispenser. After the application of the ink, the ink was heated at 70°C under a N₂ atmosphere to be cured and was then heated at 120°C for 1 minute on a hot plate to remove the porogen, thereby preparing a negative electrode 10 having an insulating layer 13A.

### PREPARATION OF POSITIVE ELECTRODE 20

A positive electrode mixture layer 22 was formed on the positive electrode base 21 in the same manner as in Example 1, the ink prepared in was applied onto the positive electrode mixture layer 22 using a dispenser, and the positive electrode 20 having an insulating layer 23A was prepared in the same manner as in .

### PREPARATION OF ELECTRODE ELEMENT 40 AND NONAQUEOUS ELECTROLYTE STORAGE ELEMENT 1

The negative electrode 10 was arranged so as to face the positive electrode 20 via a separator 30 made of a polypropylene microporous film having a thickness of 25 µm. Specifically, the negative electrode 10 was disposed above the positive electrode 20 such that the insulating layer 13A of the negative electrode 10 and the insulating layer 23A of the positive electrode 20 faced each other via the separator 30 made of a polypropylene microporous film. Next, the negative electrode lead wire 41 was joined to the negative electrode base 11 by welding or the like, and the positive electrode lead wire 42 was joined to the positive electrode base 21 by welding or the like, thereby preparing an electrode element 40. Next, a 1.5 M LiPF₆ (EC:DMC = 1:1) electrolyte was injected as a nonaqueous electrolyte into the electrode element 40 to form an electrolyte layer 51, and the electrolyte layer 51 was then sealed with a laminate outer package material as an outer package 52, thereby preparing a nonaqueous electrolyte storage element 1.

As a result of SEM observation, it was found that the insulating layers 13A and 23A obtained in Example 9 were observed to have pores with a size of approximately 0.1 to 10 µm. That is, the SEM observation results indicated that the insulating layers 13A and 23A prepared were porous insulating layers.

Next, Test 3 to Test 5 were conducted on the ink for forming an insulating layer produced in Example 9 and on the nonaqueous electrolyte storage element 1 produced in Example 9, in the same manner as in Example 5. The results are illustrated in Table 2 below.

### EXAMPLE 10

### PREPARATION OF INK

The following solution was prepared as an ink for forming an insulating layer.
- Tricyclodecanedimethanol diacrylate (Daicel-Ornix Corporation): 29 parts by mass
- Tetradecane (FUJIFILM Wako Chemical Corporation): 70 parts by mass
- AIBN (Wako Pure Chemical Industries, Ltd.): 1 part by mass

After the preparation of the ink, a nonaqueous electrolyte storage element 1 was prepared in the same manner as in to described in Example 9.

As a result of SEM observation, it was found that the insulating layers 13A and 23A obtained in Example 10 were observed to have pores with a size of approximately 0.1 to 10 µm. That is, the SEM observation results indicated that the insulating layers 13A and 23A prepared were porous insulating layers.

Next, Test 3 to Test 5 were conducted on the ink for forming an insulating layer produced in Example 10 and on the nonaqueous electrolyte storage element 1 produced in Example 10, in the same manner as in Example 5. The results are illustrated in Table 2 below.

### COMPARATIVE EXAMPLE 18

### PREPARATION OF INK

The following solution was prepared as an ink for forming an insulating layer.
- Tricyclodecanedimethanol diacrylate (Daicel-Ornix Corporation): 49 parts by mass
- Cyclohexanone (manufactured by Kanto Chemical Co., Ltd.): 50 parts by mass
- AIBN (Wako Pure Chemical Industries, Ltd.): 1 part by mass

After the preparation of the ink, a nonaqueous electrolyte storage element was prepared in the same manner as in to described in Example 9.

As a result of SEM observation, it was found that the insulating layers obtained in Comparative Example 18 were not formed with pores having a size of approximately 0.1 to 10 µm.

Next, Test 3 to Test 5 were conducted on the ink for forming an insulating layer produced in Example 18 and on the nonaqueous electrolyte storage element 1 produced in Example 18, in the same manner as in Example 5. The results are illustrated in Table 2 below.

### COMPARATIVE EXAMPLE 19

### PREPARATION OF INK

The following solution was prepared as an ink for forming an insulating layer.
- Tricyclodecanedimethanol diacrylate (Daicel-Ornix Corporation): 29 parts by mass
- Cyclohexanone (manufactured by Kanto Chemical Co., Ltd.): 70 parts by mass
- AIBN (Wako Pure Chemical Industries, Ltd.): 1 part by mass

After the preparation of the ink, a nonaqueous electrolyte storage element was prepared in the same manner as in to described in Example 9.

As a result of SEM observation, it was found that the insulating layers obtained in Comparative Example 19 were not formed with pores having a size of approximately 0.1 to 10 µm.

Next, Test 3 to Test 5 were conducted on the ink for forming an insulating layer produced in Example 19 and on the nonaqueous electrolyte storage element 1 produced in Example 19, in the same manner as in Example 5. The results are illustrated in Table 2 below.

**[Table 2]**

| | TEST 3 | TEST 4 | TEST 5 |
|---|---|---|---|
| EXAMPLE 5 | o | o (10 s) | o |
| EXAMPLE 6 | o | o (5 s) | o |
| COMPARATIVE EXAMPLE 8 | x (non-adhesive) | o (20 s) | x (20 Ω) |
| COMPARATIVE EXAMPLE 9 | o | × (190 s) | o |
| COMPARATIVE EXAMPLE 10 | × | △ (68 s) | o |
| COMPARATIVE EXAMPLE 11 | × | △ (59 s) | o |
| COMPARATIVE EXAMPLE 12 | o | x (280 s) | △ (1M Ω) |
| COMPARATIVE EXAMPLE 13 | o | x (300 s) | o |
| COMPARATIVE EXAMPLE 14 | o | x (280 s) | o |
| COMPARATIVE EXAMPLE 15 | o | × (200 s) | o |
| EXAMPLE 7 | o | o (8 s) | o |
| EXAMPLE 8 | o | o (3 s) | o |
| COMPARATIVE EXAMPLE 16 | o | × (300 s) | o |
| COMPARATIVE EXAMPLE 17 | o | x (220 s) | o |
| EXAMPLE 9 | o | o (22 s) | o |
| EXAMPLE 10 | o | o (12 s) | o |
| COMPARATIVE EXAMPLE 18 | o | x (340 s) | o |
| COMPARATIVE EXAMPLE 19 | o | × (300 s) | o |

Tests 3 to 5 are for testing adhesion, electrolytic permeability, and insulation at high temperature. These tests were used for determining whether the insulating layers functioned as a functional layer having a short circuit prevention effect even when the element is deformed due to high temperature, external impact, or permeation of foreign matter.

Table 2 indicates excellent results in any of the tests for Example 5 and Example 6. First, Test 3 indicates that the ink for forming an insulating layer produced in Example 5 and in Example 6 had low viscosity. Based on the results of Test 3, the low viscosity of the above ink appeared to have sufficiently allowed the ink to follow uneven surfaces of the active materials and to have sufficiently allowed the ink to permeate into the active materials so as to form the insulating layers with excellent adhesion.

Further, the results of Test 4 indicate that the obtained insulating layer structure was a porous body having a communicative property and having a pore size of approximately 1.0 µm, and that the obtained insulating layers exhibited excellent electrolytic permeability. The results of Test 5 also indicate that formation of an insulating layer is effective for preventing short circuiting at high temperature. Thus, the above results of Tests 3 to 5 indicated that in Examples 5 and 6, it is possible to provide an electrode exhibiting an excellent short circuit prevention effect at high temperature or under external pressure application by forming a porous insulating layer on the electrode mixture layer.

However, with respect to Comparative Example 8, the results indicated a short circuit occurred at high temperature. This indicates that the conventional separator had insufficient heat resistance; hence, when the insulating layer is not formed on the electrode mixture layer, a short circuit will occur due to deformation of the separator at high temperature. In Comparative Example 9, due to the high proportion of porogen in the ink, the ink failed to form pores effective for electrolyte permeation, which led to poor results in Test 4.

Next, in Comparative Example 10, PVdF contained in the ink appeared to have enhanced adhesion to the electrode mixture layer as a binder; however, alumina microparticles were used as a main component, and the content of the binder itself was thus small, which resulted in insufficient binding force. The amount of binder may be increased to improve adhesion; however, the increase in the amount of binder will not be an effective method because of a trade-off relationship with the permeability of the electrolyte.

In Comparative Example 11, due to a polymer contained in the ink, the viscosity was high, and a clear interface existed between the electrode mixture layer and the insulating layer, which resulted in insufficient adhesion.

In Comparative Example 12 and Comparative Example 13, an insulating layer having high adhesion was obtained with ink using a low viscosity UV curable resin. However, in general, it is difficult to form porosity to obtain sufficient electrolytic permeability for driving the battery using the insulating layer made of UV curable resin, which had led to poor results in Test 4.

In Comparative Example 14 and Comparative Example 15, porogens were highly compatible with the monomers used, and porous insulating layers having pores with a size of approximately 0.1 to 10 µm failed to be obtained, which resulted in insufficient electrolytic permeability.

The results of Example 7 and Example 8 indicate that even when the type of resin material used was changed, the same results as those obtained in Example 5 and Example 6 were obtained.

In addition, reasons for failing to obtain excellent results in Test 4 in Comparative Example 16 and Comparative Example 17 are the same as the reasons in Comparative Example 14 and Comparative Example 15.

The results of Example 9 and Example 10 indicate that even when the type of resin material used was changed, the same results as obtained in Example 5 and Example 6 were obtained.

Further, reasons for failing to obtain excellent results in Test 4 in Comparative Example 18 and Comparative Example 19 are the same as the reasons in Comparative Example 14 and Comparative Example 15.

In the related art technology, a battery member for preventing a short circuit was prepared by using a film shaped resin separator or a porous insulating layer made of a high viscosity ink formed on an electrode mixture layer, and adhesion between the electrode mixture layer and the insulating layer was thus low. Accordingly, such a related art battery member was insufficient for improving a safety effect when the device was deformed due to heat or impact applied from the outside or when foreign matter such as a nail penetrated.

In contrast, as described in Examples 5 to 10, even when the element deforms due to high temperature, external impact, or permeation of foreign matter, it is possible to provide an electrode exhibiting an excellent short circuit prevention effect by forming a porous insulating layer, where at least a part of the porous insulating layer is present inside the electrode mixture layer and is integrated with a surface of the active material.

Although preferred embodiments, examples, and the like have been described in detail above, the present invention is not limited to the above-described embodiments and the like, and various modifications, substitutions, and the like may be made without departing from the scope described in the claims.

For example, in the above-described embodiments, the negative electrode and the positive electrode of the electrode element both have a porous insulating layer, but either one of the negative electrode and the positive electrode may have a porous insulating layer. In this case, the positive electrode and the negative electrode may be laminated directly or may be laminated via a separator.

### Reference Signs List

- 1: nonaqueous electrolytic storage element
- 10: negative electrode
- 11: negative electrode base
- 12: negative electrode mixture layer
- 13: porous insulating layer
- 13x: pore
- 20: positive electrode
- 21: positive electrode base
- 22: positive electrode mixture layer
- 23: porous insulating layer
- 30: separator
- 40, 40A: electrode element
- 41: negative electrode lead wire
- 42: positive electrode lead wire
- 51: electrolyte layer
- 52: outer package

The present application is based on and claims priority to Japanese Patent Application No. 2017-243163 filed on December 19, 2017, and Japanese Patent Application No. 2018-187739 filed on October 2, 2018, the entire contents of which are hereby incorporated herein by reference.

The following examples listed below are directed to advantageous embodiments which represent separate and independent inventions.

Embodiment A. An electrode comprising:
an electrode base; and
an electrode mixture layer containing an active material and formed on the electrode base; and
a porous insulating layer formed on the electrode mixture layer, wherein
the porous insulating layer contains a resin as a main component, and
a part of the porous insulating layer is present inside the electrode mixture layer.

Embodiment B. The electrode according to Embodiment A, wherein the electrode mixture layer is integrated with a surface of the active material.

Embodiment C. The electrode according to Embodiment A or B, wherein the porous insulating layer has a communicative property of connecting one of pores of the porous insulating layer to other pores around the one of pores.

Embodiment D. The electrode according to any one of Embodiments A to C, wherein the porous insulating layer contains a resin as a main component and has a crosslinking structure.

Embodiment E. An electrode element comprising:
a negative electrode and a positive electrode structurally laminated such that the negative electrode and the positive electrode are insulated from each other, wherein the negative electrode and/or the positive electrode is the electrode according to any one of Embodiments A to D.

Embodiment F. An electrode element comprising:
a negative electrode and a positive electrode structurally laminated such that the negative electrode and the positive electrode are in contact with each other, wherein the negative electrode and/or the positive electrode is the electrode according to any one of Embodiments A to D.

Embodiment G. The electrode element according to Embodiment F, wherein the negative electrode and the positive electrode are laminated via a separator.

Embodiment H. A nonaqueous electrolyte storage element comprising:
the electrode element according to any one of Embodiments E to G;
a nonaqueous electrolyte injected into the electrode element; and
an outer package for sealing the electrode element and the nonaqueous electrolyte.

Embodiment I. A method for producing an electrode having a porous insulating layer on an underlayer, the method comprising a process of forming the porous insulating layer, wherein the process includes:
preparing a material having a precursor containing a polymerization initiator to be activated with light or heat and a polymerizable compound dissolved in a liquid;
applying the material onto the underlayer; and
applying light or heat to the material to the underlayer to enable progress of polymerization; and
drying the liquid so as to form the electrode having at least a part of the porous insulating layer present inside the underlayer and integrated with a surface of a substance constituting the underlayer.

Embodiment J. The method for producing an electrode according to Embodiment I, wherein the polymerizable compound exhibits compatibility with the liquid, and the compatibility with the liquid decreases to cause phase separation inside the material as polymerization progresses.

Embodiment K. The method for producing an electrode according to Embodiment I or J, wherein the polymerizable compound has a vinyl group.

Embodiment L. The method for producing an electrode according to any one of Embodiments I to K, wherein the porous insulating layer has a communicative property of connecting one of pores of the porous insulating layer to other pores around the one of pores.

## Claims

1. A liquid comprising:
a polymerizable monomer; and
a porogen,
wherein the porogen is a liquid substance capable of dissolving the polymerizable monomer and causing phase separation in a course of polymerization of the polymerizable monomer, and
wherein the polymerizable monomer is capable of forming a porous structure, upon being polymerized.

2. The liquid as claimed in claim 1, wherein the porous structure has a resin as a main component.

3. The liquid as claimed in claim 2, wherein the porous structure has a co-continuous structure having a three-dimensional branched network structure of the cured resin as a skeleton.

4. The liquid as claimed in claim 2, wherein the porous structure has a plurality of pores and a communicative property, where one pore is connected to other pores around the one pore.

5. The liquid as claimed in claim 4, wherein a size of pores of the porous structure is 0.1 µm to 10 µm.

6. The liquid as claimed in claim 1, wherein the porous structure is formed in the course of polymerization of the polymerizable monomer with light or heat, when the phase separation is caused.

7. The liquid as claimed in claim 1, wherein the polymerizable monomer has at least one radically polymerizable functional group.

8. The liquid as claimed in claim 6, wherein the polymerizable monomer has two or more radical polymerizable functional groups.

9. The liquid as claimed in claim 1, further comprising:
an optical radical generator.

10. The liquid as claimed in claim 1, having a viscosity from 1 to 150 mPa·s at 25°C.

11. The liquid as claimed in claim 1, wherein the polymerizable monomer has a solid content concentration of 5 to 70% by mass in the liquid.

12. Use of the liquid as claimed in claim 1, for applying to an electrode (10, 20) having an electrode mixture layer (12, 22).

13. The use of the liquid for applying to the electrode (10, 20) as claimed in claim 12, wherein the electrode (10, 20) further includes an electrode base (11, 21) and a porous insulating layer (13, 23), and
wherein part of the porous insulating layer (13, 23) is present inside the electrode mixture layer (12, 22).

14. The use of the liquid, for applying to the electrode as claimed in claim 13, wherein the part of the porous insulating layer (13, 23) is present in the electrode mixture layer (12, 22) within 0.5% or more.
